# EUROPEAN PATENT APPLICATION

(11) **EP 4 332 849 A1**
(43) Date of publication of application: **06.03.2024**
(21) Application number: 23194089.1
(22) Date of filing: 29.08.2023
(51) Int. Cl.: G06N 20/00, G06F 3/01, G06F 3/02, G06F 3/033, G06F 3/041

(54) **A METHOD PERFORMED BY AN INFORMATION PROCESSING DEVICE, A PROGRAM PRODUCT, AND A SYSTEM FOR ACQUIRING ARTIFICIAL INTELLIGENCE FROM PROCESSING CONTEXT RELATED OPERATIONAL, HUMAN BIO-SIGNAL AND HUMAN CONDUCT DATA**

(30) Priority: 30.08.2022 NL 1044409
(71) Applicant: Zander Laboratories B.V., 2628 XJ Delft (NL)
(72) Inventor: ZANDER, Thorsten, 03046 Cottbus (DE); KROL, Laurens, 10625 Berlin (DE); SOLIS ESCALANTE, Teodoro, 15711 Koenigs Wusterhausen (DE); CHITU, Alin, 2625 PB Delft (NL)
(74) Representative: Dohmen, Johannes Maria Gerardus

(57) **Abstract**

A data processing method performed by an information processing device (50) operating one or more data processing algorithms enabling artificial intelligence (51). Artificial Intelligence, Al, is provided by assigning mental categories from simultaneously collected operational data (58) originating from a context (10), and human bio-signal data (45, 46) and human conduct data (48) relating to human participation (30) with this context (10). A data processing algorithm comprising artificial intelligence acquired in accordance with the method, a program product, a method of processing operational data by a data processing algorithm comprising the acquired artificial intelligence, and a data processing system are also included.

## Description

### Technical Field

The present disclosure relates to data processing performed and implemented in an information processing device, such as but not limited to a computer, a computing device, a virtual machine, a server, or a plurality of cooperatively operating computers, computing devices, virtual machines, or servers. In particular, the present disclosure relates to a method for providing and/or improving artificial intelligence by an information processing device, involving a data processing algorithm enabling artificial intelligence. More specifically, the present disclosure relates to acquiring, aligning, creating, generating, deploying, augmenting and modifying artificial intelligence, by an information processing device, from processing context-related, and interrelated operational data and human participation data.

### Background

In general, Artificial Intelligence, Al, technology comprises the use and development of computer systems that can learn and adapt to perform tasks without being explicitly programmed, by using algorithms and statistical models.

Al technology is already widely integrated in today's modern society. Data processing systems using Al technology have proven to handle and complete rather complex tasks commonly associated with human beings with more precision and in less time than would be possible for humans.

Learning or training is one of the fundamental building blocks of Al technology. From a conceptual standpoint, learning is a process that acquires or imparts and/or improves the knowledge of a data processing algorithm enabling artificial intelligence by making observations about its environment or context. From a technical standpoint, Al learning, specifically supervised AI learning, comprises processing of a set of input-output pairs for a specific function for predicting the outputs of new inputs.

One category of Al systems presently available are so-called 'task intelligent systems', designed to automatically perform singular tasks, focused on highly specific technical domains, such as object recognition, facial recognition, speech recognition, game playing, autonomous vehicle operation, product recommendation, or internet searching. This category of Al systems is generally referred to as Artificial Narrow Intelligence, ANI, or weak Al.

Weak or narrow data processing algorithms enabling artificial intelligence are generally trained through many examples or iterations of their respective task, receiving performance feedback from an evaluation function, reward function, loss function, error function, etc. in order to reinforce or otherwise learn beneficial behavior and/or unlearn or disincentivize actions that do not lead to beneficial behavior or intended outcomes within the given context.

Reinforcement Learning, RL, is a machine learning technique that allows data processing algorithms or agents enabling artificial intelligence to learn by interacting with an environment and receiving feedback in the form of rewards or penalties for their actions. By exploring different approaches and evaluating their success, RL enables agents to improve by learning or discovering effective strategies for solving complex problems. In particular, Deep Reinforcement Learning, DRL, has emerged as a powerful approach for learning optimal policies for actions for Al systems. By combining Deep Learning, DL, which allows for agents to be efficiently trained on large datasets, and RL which enables agents to learn from experience, DRL allows agents to learn complex behaviors and make decisions in intricate environments.

The need for an evaluation function is why many current Al applications are games such as chess or other games, where the final game outcome or continuous game score can serve to evaluate in-game behaviors. Furthermore, games represent a context of limited dimensionality in which the dependencies between Al actions, context parameters, and game outcome or score can be successfully mapped. The game speed can be increased arbitrarily to allow for more training iterations per unit of time. The DRL approach, for example, was noticeably demonstrated by employing it for training agents to play several Atari^{®} and Nintendo^{®} games.

However, more scenarios, handling multiple, versatile and/or non-predefined tasks, do not have an objective evaluation function like a game score, and cannot arbitrarily be sped up. To interpret actions in more scenarios in terms of goal achievement, benefit, or appropriateness within the current context or a larger strategy, a human is needed to perform that interpretation. Humans can distill relevant dimensions or key factors from situations and evaluate the facts or the events that are taking place accordingly.

Experiments have been performed to impart human intelligence data into the processing of a task intelligent Al system, by human evaluation of a task performed or proposed by the system, such as a game.

Human observers may, for example, monitor an Al data processing algorithm traversing a space performing various actions, and explicitly communicate whether or not each change in movement direction or each chosen action is conducive to the goal. In this way, by the active feedback or guidance provided by the human user, the system successively learns the best possible policy or policies to perform a respective task.

Similarly, there are other instances where human intelligence is still explicitly required or otherwise beneficial in the process of training an Al. For example, a human's general or specific understanding of the larger context, including the temporal evolution of events in a scene, may be needed to properly identify relevant objects or events, to correct automatic decisions made by the Al, or to resolve ambiguity.

This has led to Al training or learning scenarios where human observers press buttons or provide spoken input or otherwise perform explicit ratings to indicate what is appropriate/inappropriate behavior, to manually provide labels, or otherwise to generate additional input by explicitly generating descriptors for concrete pieces of data such as images, videos, or audio to train a data processing algorithm enabling artificial intelligence operated by an information processing device.

ANI has in recent years reached human-level or even greater performance in specific, well-defined tasks through advances in Machine Learning, ML, and deep learning in particular, by processing larger amounts of operational or contextual data, among which environmental data, information data, measurement data, control data and state data of a plurality of devices operating in a particular well-defined context or environment. Especially when such data is additionally combined or otherwise associated with data provided based on human intelligence, such as labels, descriptors, or judgements, can an algorithm enabling artificial intelligence effectively achieve or even surpass human-level performance.

Importantly, however, while human experts may perform or handle a complex task or operation in a versatile and/or well-defined context or environment, they may not always be able to explicitly indicate how they perform the task or operation and on the basis of which contextual parameters or variables their interpretation and evaluation of the task or operation is performed, i.e. how a decision or result is reached. Therefore, the human-generated labels, descriptors, or judgements that ANI relies on for its own artificial intelligence may not be available for all tasks.

Non-limiting examples of such complex tasks or complex operations can be found in the field of healthcare diagnosis and troubleshooting, logistics planning and scheduling, financial decision making, driving a car on the road, et cetera.

For other tasks, labels, descriptors, or judgements can be produced to some extent by humans, but their production may be limited in scope and difficult to produce at the scale, complexity, and speed needed to keep up with current developments in artificial intelligence research.

The domain of Natural Language Processing, NLP, is at present the direction in which Al technology has made its most tremendous and important progress. Large Language Models, LLM, such as OpenAl's GPT^{™} series, have recently achieved impressive results in various NLP tasks, such as language generation, translation, and comprehension. Currently, the most successful LLMs are built using very large Transformer architectures - a Transformer is a type of neural network architecture that is based on the concept of self-attention, which allows the model to weigh the importance of different parts of the input sequence, as well as how they relate to one another - and are trained using both supervised and unsupervised training schemes on vast amounts of text data. By exposing the model to a large amount of text data, patterns and relationships between words and sentences are learned thus enabling optimal generation of output sequences.

For example, GPT-3 was trained on a massive dataset of over 570 GB of text data, encompassing books, articles, and websites. The model consists of 175 billion parameters, making it one of the largest language models ever developed. The resulting model is capable of generating coherent and realistic language, answering questions, and even performing translating text from one language to another. One of the most remarkable aspects of GPT-3 is its ability to perform zero-shot or few-shot learning. This means that the model can execute tasks for which it was not explicitly trained, simply by being prompted with some examples and a description of the task. For instance, the model can generate a new text piece on a specific topic, summarize a lengthy text, or even create computer code based on a natural language description of a program. The success of large language models like GPT-3 has demonstrated Al's potential for natural language processing and opened new possibilities for the development of conversational agents, chatbots, and other NLP applications. An improved version of GPT-3, namely GPT-3.5, was used as the baseline model for the now well-known, chatbot ChatGPT^{™}. ChatGPT^{™} was developed by finetuning the baseline model using Reinforcement Learning from Human Feedback, RLHF. This means that by using manual feedback from human operators the model performance was optimized towards matching the point of view of human preferences, such as diminished bias and better adherence to a set of desired rules.

Even though RLHF is a powerful tool for enabling human-like behavior in AI models and improving Al alignment, it introduces its own challenges. RLHF relies on a large number of human evaluators, is hard to scale up, and is limited in the amount and type of feedback it can capture. Moreover, acquiring high-quality feedback can be slow and hard to obtain as it is highly subjective and the consistency of the feedback varies depending on the task, the interface, and the individual preferences, motivations and biases of humans. These challenges are further compounded by the limitations imposed by the Transformer Architecture itself. Being computationally complex and resource-intensive, Transformers require significant computational power to run, posing constraints on the scalability and cost-effectiveness of the RLHF implementation.

Hence, to perform a rather complex task requiring human expert knowledge, the development of Al training or learning scenarios to train or learn a data processing algorithm enabling artificial intelligence to perform such an expert task or operation is very difficult and very time consuming because of the large training and calibration data sets involved, and sometimes hardly or even not feasible when the expert is not able to outline his/her strategy to perform the task or operation, or when the needed information cannot be explicitly produced at the scale or speed needed by the application due to inherent limitations in the communication of such information such as via button presses, for example.

Besides ANI systems, the broader and long-term goal is to create an Al for handling plural tasks in changing contexts with intelligence proportional to human general intelligence, also known as Artificial General Intelligence, AGI, or strong Al.

A key challenge in this context is the Al alignment problem, which entails ensuring that Al systems are designed to act in ways that are beneficial to humanity, aligning their objectives with human values and expectations. Solving this problem requires a profound understanding of both Al technologies and human behavior, along with the development of strategies and mechanisms to align the two effectively. Human values and expectations are another example of information that is difficult for humans to verbalize explicitly.

As will be appreciated, acquiring the necessary data, and developing training or learning schemes for training data processing algorithms enabling artificial intelligence to operate in various contexts and environments reflecting the interpretations and decision making by a human user, including those human mental strategies that may not be readily or explicitly expressible, or subjective human mental states such as error, surprise, agreement, understanding, or the like appears practically using state of the art Al training or learning techniques.

For various reasons it is also problematic and difficult to operate data processing algorithms enabling artificial intelligence handling multiple, versatile, and non-predefined tasks when working in a real-life or real-world context. That is a non-predefined or authentic context or environment, occurring in reality or practice, as opposed to an imaginary, a simulated, test or theoretical context, for example.

One problem in real-life contexts is the absence of a finite, a priori repertoire of known responses and states, and the resulting difficulty in identifying which of any number of perceived states bear specific relevance, for example.

The processing, by a data processing algorithm enabling artificial intelligence of operational data originating in relation to a real-life context or environment for performing context dependent valuations, interpretations, assertions, labelling, etc. presents a further problem, because this type of operations requires interpretation of the context or environment.

For example, paying closer attention to some aspects or features of the context than to others based on a general understanding of these aspects or features and their role in the context as a whole, or based on creative insight into the role that these aspects or features may potentially play. This is a judgement no objective sensor or data processing algorithm enabling artificial intelligence can make itself, but a human can make such an interpretation.

Training of data processing algorithms enabling artificial intelligence or machine learning systems for operating in a real-life context and environment by a human user providing active feedback reflecting its interpretations, for example, is practically not feasible because of the large training and calibration data sets involved, making such training very time consuming and demanding for a human user.

Integrating human mental data in the processing of operational data originating in relation to a real-life context or environment, i.e., rendering the system neuroadaptive, presents a further problem because ambiguities and inconsistencies in the relationship between operational data and human mental data of a human participating in the context pose a potential source of error in the processing by a data processing algorithm enabling artificial intelligence.

### Summary

It is an object of the present disclosure to provide a method, system and program product for providing, acquiring, aligning, creating, generating, augmenting and/or modifying Artificial Intelligence, Al, involving a data processing algorithm enabling artificial intelligence operated by an information processing device, based on at least one of human cognitive and affective responses and interpretations, human expectations, human logic, reasoning, judgements, and strategies, human values and morality. A data processing algorithm enabling artificial intelligence, hereinafter also referred to as an Al-enabled data processing algorithm, for the purpose of the present disclosure, is any data processing algorithm that allows information processing devices or machines to process data replicating human intelligence.

It is noted that an Al-enabled data processing algorithm applied with the method according to the present disclosure may possess none or may already possess a certain level of artificial intelligence, for example in that the Al-enabled data processing algorithm is able to recognize objects, devices, living beings etc. that operate or participate in a context or in that the Al-enabled data processing algorithm has already been initialized according to any of the aspects outlined below.

As such, the act or process of providing, acquiring, aligning, creating, generating, augmenting and/or modifying Al for the purpose of this disclosure includes all aspects commonly associated with the training of an Al-enabled data processing algorithm, including its initialization or initial creation and its later modification, also in a continuous fashion, i.e. continuous learning.

In a first aspect of the present invention, there is provided a method of providing artificial intelligence from human participation with a context, in particular a real-life context, the method performed by an information processing device operating at least one data processing algorithm enabling artificial intelligence, the information processing device performing the steps of:
- simultaneously collecting or sensing operational data originating from the context and human bio-signal data and human conduct data originating from or relating to the human participation with this context.
- identifying mental processes from at least one of the bio-signal data and the human conduct data, a mental process referring to an aspect of at least one of human cognition, emotion and individual mechanisms of human information processing;
- assigning mental categories, a mental category referring to at least one of the mental processes associated with an aspect of at least one of the operational data and the human conduct data, and
- providing the artificial intelligence from applying the mental categories by the at least one data processing algorithm enabling artificial intelligence.

This aspect of the method disclosed is based on the insight that aspects of human knowledge, human intelligence, human values and morality et cetera, applied by a human participant in observing, operating or handling and completing a task or operation in a certain context or environment, can be efficiently acquired by sensing and associating human bio-signal data and human behavior or conduct data of the human participant in relation to respective operational data originating from or in that context or environment and simultaneously collected or sensed while performing the task or operation. This, in turn, relies on the fact that the human brain evaluates perceived information automatically, according to a subjective/personalized model of the world that includes human experiences, human knowledge, human innate abilities, a human value system and morality. These functions of the brain are reflected in the neuroelectric and neurochemical activity of the brain, which can be measured as bio-signals.

Bio-signals, in the context of the present disclosure, are body signals that are generated by or from human beings, and that can be continuously measured and monitored by commercially available sensors and devices, for example.

Human conduct data comprise any human expression, communication and physical activity by a human participant while observing, operating or handling and completing a task or operation in a certain context, such as gestures, body motions, facial expressions, etc. In the present method, intermediate or final decisions made and communicated through respective conduct by the human participant are also regarded as belonging to human conduct data.

Operational data may comprise physical data and/or virtual data originating from the context. The term virtual data refers to data available from a software program or software application operating in a respective context. That is, for acquiring or sensing this type of data no separate sensors, measurement equipment or other peripheral data recording equipment are required.

The method disclosed is based on the insight that activity that occurs, or specific patterns of activity that occur, in the human bio-signal data and/or human conduct data of a human participant while observing, operating or handling and completing a task or operation in a certain context or environment refers to mental processes, i.e. the internal processes that occur with the human brain, corresponding to specific aspects of human cognition, emotion or to individual mechanisms of information processing by the human participant.

The behavior or conduct of a human participating in a context not only may reveal which part of the context or environment, i.e. the applicable operational data, is perceived, attended to, or otherwise incorporated by the human while performing a task or operation, but may also be informative of mental processes such as the individual mechanisms of information processing by the human participant, as well as strategy, logic, or knowledge applied by the human. A human expert, for example, may observe just shortly or pay no or less attention to operational data that, according to his or her knowledge, are less or even not important to his or her final decision.

Mental processes may be identified or decoded using so-called classifiers or classification algorithms. Such a classifier or classification algorithm automatically orders or categorizes the bio-signal data and/or human conduct data collected or sensed by a respective sensor or sensors into one or more respective mental processes. Classifiers are commercially available or may be derived from experiments or training data, for example.

As such, a mental process may also refer to - or be identified as - the output of a classifier decoding the presence or extent of a corresponding brain activity, for example as a real number between 0 and 1. It is noted that multiple mental processes may occur at the same time.

Examples of identifiable or decodable mental processes, i.e. respective classifiers, in accordance with the present disclosure comprise cognitive load, memory encoding, memory retrieval, perception, attention, error processing, emotion recognition, surprise, reward processing, pain, pattern recognition, intention, affect, valence, and arousal, among others.

Aside from simple judgments of 'good' and `bad', humans are capable of interpreting information in more substantial ways. Specifically, human learning and understanding are often described as categorical, assigning objects and events in the environment to separate categories. These categories are then used as an efficient, low-dimensional representation underlying further reasoning and decision-making.

In accordance with the present disclosure, mental categories are assigned or formed referring to identified or decoded mental processes in association with an aspect or aspects or features of operational data and/or an aspect or aspects or features of human behavior or conduct data simultaneously collected or sensed while performing a task or operation by a human participant in a particular context or environment.

Mental categories are formed by the information processing device automatically, from analyzing and organizing the sensed bio-signal data and/or human conduct data, and the related sensed operational data and/or human conduct data. Analyzing may involve, for example, detection of respective co-occurring bio-signal data and/or human conduct data, certain patterns occurring in these data, etc.

Hence, in accordance with the present disclosure, mental categories are assigned or formed referring to identified or decoded mental processes in association with an aspect or aspects or feature(s) and/or part(s) of operational data and/or an aspect or aspects or feature(s) and/or part(s) of human behavior or conduct data simultaneously collected or sensed while performing a task or operation by a human participant in a particular context or environment.

Respective operational data and/or conduct data are associated, either categorically or probabilistically, with at least one mental category.

The ability to recognize relevant patterns and form appropriate categories, innate to humans but often impossible to verbalize, is fundamental to how humans learn and produce intelligent behavior. In humans, such categories are created based on how the brain considers people, objects and actions et cetera are related and reflect what kind of learning may be going on in the brain, as these categories are created through experience, training, and instruction, for example.

Accordingly, by providing mental categories thus formed to the at least one Al enabled data processing algorithm, aspects of human intelligence, human values and morality reflected by the mental categories become available for either one or more of acquiring, aligning, creating, generating, augmenting and/or modifying data processing by the at least one Al enabled data processing algorithm, based on or incorporating human cognitive and affective responses, human subjective judgements, human expectations, human values and morality.

The present approach may be termed Neuroadaptive Category Learning, NCL, wherein the input from the human participant is implicitly provided by or acquired or derived from the collected bio-signal data and/or human conduct data.

NCL identifies and extracts mental categories for translating human thought processes into Al models, thereby closing the gap between human cognition and artificial intelligence. By using implicitly obtained input reflecting aspects of human intelligence and shifting our perspective from specific brain responses to a categorical view of understanding a task, neuroadaptively trained Al-enabled algorithms can outperform traditional AI learning or training methods by a significant margin.

Apart from increasing performance, NCL has a number of other advantages over traditional techniques employed to provide Al.

Identifying or decoding mental processes from the collected bio-signal data and/or the human conduct data does not rely on the active participation of the user, no additional actions are required on the part of the human to convey this information. NCL eliminates the need for pushing buttons, verbalization, or manual labeling, providing a more direct, natural and intuitive way for humans to communicate their preferences and evaluations. Overall, this saves time and resources, increases efficiency and streamlines the process, making it easier to scale up operations.

Besides, NCL may provide continuous and real-time feedback with high precision and resolution. Traditional feedback is given over large portions of data that first need to be processed and evaluated as a whole. In the case of LLMs, feedback is usually provided for the entire output (e.g. a complete paragraph or text), unable to evaluate subsections or individual components (e.g., individual words used within that text), making the process suboptimal. In contrast, NCL allows fine-grained feedback over individual aspects or features of the training data, while retaining overall output evaluation.

In other words, bio-signal and/or behavior or conduct data derived information provides for more nuanced information regarding the humans' decision-making process. In traditional Al training processes, human participants typically provide feedback after having completed the evaluation of a particular task or event and reached a conclusion about it. Intermediary decisions, judgments, and thought processes that occur throughout the performance and evaluation of operational data are ignored. As a result, traditional human input used for Al training only reflects the human participant's final assessment of the context without explicitly revealing the underlying reasoning or cognitive processes that led to their conclusion. NCL provides a more comprehensive understanding of how human participants arrive at their conclusions, enables the identification of key factors that influence decision making and facilitates alignment with human values.

Moreover, specifically in the case of NLP, for example, NCL can capture information on how individual language components relate to various mental and emotional states. This helps to identify when words and phrases are emotionally charged or when they have negative connotations, are unexpected, misused or are otherwise unwanted, significantly improving context understanding and affective and figurative speech.

Rather than developing and applying complex, laborious and time-consuming Al training or learning scenarios to train or learn an Al-enabled data processing algorithm to perform a task or operation, the present method effectively associates sensed interrelated operational, human bio-signal and human conduct data to extract or deduct a strategy or strategies and decision-making processes from observing the human user to train the Al-enabled data processing algorithm.

The present method is versatile and applicable in a variety of contexts from which operational data originate, in particular data pertaining to technological states and technological state changes of a technical device or devices operating in a respective context, and more particular a device or devices controlled by the information processing device operating the at least one Al-enabled data processing algorithm.

For the purpose of the present disclosure, technological states comprise any of but not limited to device input states, device output states, device operational states, device game states, computer aided design states, computer simulated design states, computer peripheral device states, and computer-controlled machinery states and respective state changes. A technological state change in a context is any action undertaken by a piece of technology.

The term technology collectively refers to any and all (connected) technological elements in any potential situation or context. With a technology's state being its specific current configuration, a technological state change is thus any change in configuration that the technology undergoes.

In practice, physical operational data may be sensed by any number or types of sensors such as but not limited to cameras, thermal imagers, microphones, radar, lidar, chemical composition sensors, seismometers, gyroscopes, etc., and may thus be capable of recording a context and the events taking place within it to any possible degree of objective accuracy.

For the purpose of the present disclosure, organisms or living beings may also form part of a context and the acts performed thereby and behavior observed thereof are likewise considered as operational data originating form that context.

It is noted that operational data in the light of the present method also refers to information relating to a context as such, i.e. environmental information obtained from sources not directly controlled by the information processing device, such as the presence, appearance, and behavior of non-technological or non-context connected elements, or a weather forecast, for example. As such, the present method is similarly versatile and applicable in a variety of contexts from which operational data can be obtained by technology using any number and type of sensors.

The disclosed method's versatility is further achieved based on the insight that these operational data originating from a context can be expertly, efficiently, automatically, and implicitly interpreted by human intelligence. Aspects of this intelligence, derived or obtained, processed, and provided in the manner disclosed here using human bio-signals, human conduct data and operational data, can then be provided to the Al-enabled algorithm, allowing it to obtain meaningful inputs and function in contexts that would otherwise be too complex and/or too unstructured, specifically real-life contexts.

The term bio-signals refers to both electrical and non-electrical time-varying signals comprising any of human body bio-signals and measurements of human physiological structure and function, monitored or sensed by a number of commercially available sensors, for example, and operatively connected with the human participant, i.e. worn by or aimed at the human participant, including but not limited to at least one of direct and indirect measurements of electro-cardiac activity, body temperature, eye movements, pupillometric, hemodynamic, electromyographic, electrodermal, oculomotor, respiratory, salivary, gastrointestinal, genital activity and brain activity. Brain waves and other measures of brain activity are also bio-signals for the purpose of the present method.

The term indirect measurements here also refer to derivate measures of bio-signals, including physiological parameters such as heart rate variability, gaze, peak amplitudes, power in specific frequency bands, and signal rise and recovery times, for example.

Human conduct data may be monitored or sensed by a number of commercially available sensors, for example, operatively connected with the human participant, i.e. worn by or aimed at the human participant, including but not limited to input modalities comprising a keyboard, push buttons, switches, touch screen, mouse, joystick, electronic pencil/stylus, laser pointer, motion controller, game controller, microphones, cameras, thermal imagers, motion capture devices, pressure sensors, gyroscopes or other equipment for signaling a selection or decision for example.

For the purpose of the present disclosure, the term 'simultaneously collected or sensed' with respect to the operational data, human bio-signal data and human conduct data points out that these data are related with respect to their occurrence in time while a human participant is performing a task or operation or is otherwise involved with a context or environment. The respective data may be available in real-time or quasi real-time, i.e. having a close approximation to real-time data, due to an initial processing or measurement or sensing delay, for example.

It will be appreciated that in accordance with the present disclosure mental processes and mental categories may be identified or assigned in an automated manner in real-time or quasi real-time, and likewise the behavior of the Al enabled data processing algorithm.

The automatic formation of mental categories may comprise multiple iterations of, for example, selecting, categorizing, clustering, projecting, partitioning, and transforming the categories and their constituent elements based on features and patterns in the operational data, human bio-signal data, and human conduct data.

Non-limiting examples of contexts or fields at which the present method can be applied for already solving existing problems or extend the Al capabilities of given systems are human-computer interaction, human-machine systems, human-robotic interaction, robotics, assistive technologies, medical technology, treatment/curing of health conditions, cyber security and cyber technology, as well as in the sectors of law enforcement and interrogation, border security systems at airports, mind control, psychological modification and weapon systems, or combinations of such fields.

In an embodiment of the present disclosure, the information processing device further performing the steps of:
- identifying mental states from simultaneous mental processes, a mental state referring to a condition of at least one of human cognition, emotion and individual mechanisms of human information processing;
- constructing a multi-dimensional mental state data space, wherein a respective mental process forms a dimension of such multi-dimensional mental state data space, and
- assigning mental categories in the multi-dimensional mental state data space, a mental category referring to a particular subspace of the multi-dimensional mental state data space associated with aspects or features of at least one of the operational data and the conduct data.

To gain a deeper understanding of an individual's cognition, it is beneficial to look at more than just isolated mental processes. In the context of this disclosure, a mental state refers to a higher-order condition or status of cognition or emotion, incorporating and combining multiple individual simultaneous mental processes. Different mental states correspond to different combinations of mental processes. For example, specific aspects of memory, attention, perception, et cetera, i.e. mental processes, may be combined to form identifiable interpretations, thoughts, attitudes, or feelings.

As such, different mental processes interact and influence each other to produce an overall mental state, which can be understood as a combination of different mental processes operating in parallel. Hence, in accordance with the present disclosure, a Multi-Dimensional Mental State, MDMS, data space is constructed, spanned by a combination of multiple simultaneous mental processes.

Any point in the MDMS space corresponds to a specific mental state, as defined by the specific extent of the activity of the underlying mental processes or the specific output of the corresponding classifiers. Conversely, any specific combination of simultaneous mental process activity can be given a specific data point within the MDMS space.

Everything a human perceives, interprets, thinks, or otherwise processes using his/her intelligence elicits brain activity. Therefore, to the extent that this brain activity is captured by the individual mental processes/classifiers contributing to an MDMS space, everything a human perceives, etc., can be assigned to a point in that space.

However, the same thing perceived by a different person can end up on a different point in the same MDMS space. For example, a red teacup may end up on different MDMS locations depending on whether the human observer prefers tea or coffee, prefers red or white, prefers cups or glasses, has seen that exact teacup before or not, has ever seen any teacup before or not, has a bad memory of once breaking someone's beloved teacup or not, et cetera.

At the same time, all things such as the above-mentioned teacup sharing a particular subjective quality, e.g. where one person has a bad memory of once breaking some's beloved teacup, may end up in the same location in the MDMS, or at least may end up in the same location in a subspace of the MDMS. As such, the point at which a given piece of perceived context data lands in an MDMS space will likely vary between persons, but will be relatively consistent within persons, reflecting their subjective interpretations.

The focus on the perception of individual objects served merely as an example. Because all human intelligence, including cognition, knowledge, expertise, values, and morality is a function of brain activity, individual mental processes and their combination into mental states can reveal relevant aspects of this intelligence.

Mental categories are now assigned or formed by identifying which subspaces of the MDMS data space are consistently associated with which aspects or features and/or part of the operational and/or conduct data simultaneously collected with the bio-signal data to reflect these aspects of intelligence. These associations can be of a statistical, probabilistic, logical, or categorial nature, for example.

For example, with access to human bio-signal data numerically representing various specific mental states constituting a mental state space, a mental category may be formed that comprises all operational data that relate to a specific location or set of locations in the mental state space covered by the bio-signal data.

This means a mental category reflects the consistency that exists between and/or within persons of how aspects or features and/or parts of operational and/or conduct data lead to different mental states, and hence support to provide the element of human intelligence to the Al enabled data processing algorithm.

For example, when a teacup, a kettle, a teaspoon, East Asia, Boston, Jean-Luc Picard, and a sugar cube all land on the same subspace of the MDMS, this reveals a consistency that binds them together in that particular person's interpretation. This something, this common denominator of the operational and/or conduct data that consistently leads to the same mental state, provides a particular aspect of human intelligence, in this case meaning (e.g. "tea-related"). The subspace encompassing this mental state associated with the operational and/or conduct data is the mental category.

Finding this person-specific common denominator from the operational and/or conduct data and identifying patterns in the elicited mental states to delimit specific subspaces in the MDMS space, in real-time or quasi real-time, is a complex process that requires automated data processing and lies beyond a human manual capabilities.

That is, once established, providing mental categories to an Al enabled data processing algorithm along with operational data provides a layer of human intelligence or meaning based on subjective human interpretation the Al enabled data processing algorithm would not otherwise have access to, improving the learning performance of the AI enabled data processing algorithm.

The MDMS may be defined, for example, as a single numerical vector, where maximally complementary, i.e. ideally orthogonal, mental processes serve as individual dimensions in a multi-dimensional space. Each dimension of the MDMS is derived from the output of a classifier assessing one mental process, for example.

In accordance with the present disclosure, a multi-dimensional mental state data space may be constructed comprising psychological, cognitive, affective, neurophysiological, and otherwise human mind-related states, including but not limited to aspects of at least one of reasoning, problem solving, planning, abstract thought, concluding, interpreting, thinking, prediction, reflection, creativity, imagination, strategy, logic, moral judgement, empathy, agreement, confusion, understanding, comprehension, engagement, and satisfaction.

As explained above, for the purposes of the present disclosure and claims, the identification of mental processes and mental states, the construction of an MDMS data space, and the assignment of mental categories may all be based on an automated analysis of collected bio-signal data and/or conduct data using appropriate classifiers or classification algorithms and performed in real-time or quasi-real time.

The automatic formation of mental categories may comprise multiple iterations of, for example, selecting, categorizing, clustering, projecting, and transforming the categories and their constituent elements based on features and patterns in the operational data, human bio-signal data, and human conduct data.

As will be appreciated, the present disclosure may also be applied on a selection of the related operational data, human bio-signal data and human conduct data by the information processing device, and such a selection may be based on at least one of the sensed operational data, human bio-signal data and human conduct data.

This may provide a reduction in the amount of data used for the training or learning of an Al-enabled data processing algorithm. Selection based on operational data allows, for example, objects with specific features to be included in further processing. Selection based on bio-signal data allows parts of the operational data to be identified that were associated with specific features in related bio-signal data, specific mental processes, specific mental states, or specific mental categories.

As such, a selection based on human bio-signal data in particular allows data to be selected that could not have been identified on the basis of operational data or other overtly observable data, for example only selecting sensed operational data that relate to a mental surprise state or arousal state of a human participant, or to a previously learned mental category specific to that individual.

Selection based on human conduct data allows the Al-enabled data processing algorithm to, for example, only consider operational data related to specific human actions. Combinations of these selection approaches give rise to a variety of selection and data reduction procedures available to the Al-enabled data processing algorithm or the human configurator thereof.

This can be advantageous, for example, when not all available data bears relevance to, or otherwise carries information pertaining to, the task the Al is learning to solve, thus providing a data filtering, selection, or reduction technique. Similarly, it can be advantageous, for example, while updating an already acquired Al or in case of limited processing power and/or limited data memory available to the data processing device, such as in mobile equipment, for example.

In an embodiment of the present disclosure, the step of assigning mental categories comprises at least one of:
- assigning at least one predetermined mental category;
- assigning at least one mental category based on at least one predetermined mental process;
- assigning at least one mental category based on at least one of selected human conduct data and selected operational data, and
- assigning at least one mental category determined from a different context.

This embodiment reflects the ability to include a priori knowledge. Generally, mental categories can be assigned based on data obtained from the ability of humans to recognize features from people, objects, things, concepts, actions, et cetera, and associate these with previously learned similar features, leading to the formation or refinement of categories.

Conversely, pre-existing or previously formed mental categories can be used to infer features from previously unexperienced objects, et cetera. Specifically, hierarchically inferior, more specific mental categories can inherit features and properties of hierarchically superior, more general mental categories. These mental categories thus represent logical units used internally by humans in the process of reasoning, perceiving, thinking, and decision making, for example.

In the present disclosure, the operational data may be organized based on at least one predetermined mental category. For example, one or more mental categories related to known mental states of the human participant may be predetermined to form one or more mental categories. Providing such a predetermined mental category may, for example, guide the Al-enabled data processing algorithm to utilize a specific representation of the operational data possibly with associated predetermined logic, or to ignore particular operational data, for example, and may significantly reduce processing time by the information processing device.

Mental categories may be predetermined based on at least one predetermined mental process, e.g. a mental category related to "high arousal" or "positive valence", at least one mental state, e.g. a mental category related to "high satisfaction" or "moral disagreement", and/or based on aspects or features and/or parts of human conduct and operational data.

For the development of an Al-enabled algorithm specifically able to distinguish morally right from morally wrong decisions, it can be beneficial to predetermine MDMS subspaces and/or mental categories known to be related to human moral judgement, for example. Similarly, for Al-enabled algorithms specifically able to distinguish different types of objects, for example, some relevant objects may be associated in a predetermined manner to at least one mental category.

Furthermore, a mental category can be predetermined based on mental categories assigned in a different context, from a different participant, and/or from different data.

This embodiment is also advantageous for guiding the training of the Al-enabled data processing algorithm and reducing processing time by the information processing device, in particular when it is known beforehand that certain bio-signal data and/or human conduct data are representative for the human participation in a certain context.

In the human brain, categories may be sorted based on logical relationships, such as temporal relationships, which means that the brain recognizes that they tend to - or tend not to - pop up near one another at specific times, for example. A series of experiences that usually occur together, i.e. that are temporally related or interrelated, form an event until a non-temporally related experience occurs and marks the start of a new event. It has been found that the brain breaks experiences into events or related groups that help to mentally organize situations, using subconscious mental categories it creates.

Hence, in an embodiment of the present disclosure, artificial intelligence is provided by the information processing device based on a collection of mental categories, wherein a collection of mental categories is at least one of a set of operational data associated with mental categories and a set of collections of mental categories.

In this manner events and other logically connected parts of operational data can be formed, detected, represented and used by the artificial intelligence of an Al-enabled data processing algorithm.

A partial or complete rank or hierarchy may be provided to mental categories, for example based on patterns observed in at least one of bio-signal data and operational data reflecting the rank, generality, specificity, selectivity, similarity, dissimilarity, overlap, or separation of mental categories. A partial or complete rank or hierarchy may furthermore be imposed on mental categories, for example based on either one or both of predetermined bio-signal data and predetermined human conduct data. Mentals states having a relative higher rank or hierarchical position may give rise to a higher relevance or a higher priority or immediacy of an action or operation by the Al-enabled data processing algorithm, for example, or may be used to transfer mental categories between contexts.

The term 'collection of mental categories' in the light of the present disclosure not only refers to a temporal relationship between mental categories, or between or within collections of mental categories, but also to logic relationships, including informal logic, formal logic, symbolic logic and mathematical logic, cause and effect relationships, hierarchical relationships, et cetera, all contributing to the knowledge of a human participant in performing a task or operation.

For example, when a person inspects two tea sets and chooses one, it is not clear why the one was chosen. The mental category associated with the person's perception of each set as a whole may have been the same. But two collections of mental categories corresponding to the inspection of each piece of each set, could reveal: *tea, tea, coffee, tea* for one set, and *tea, tea, tea, tea* for the other. The human reasoning may thus have been: the first set has one piece that does not seem fit for tea.

In an embodiment of the present disclosure, the artificial intelligence is acquired based on a collection of mental categories and corresponding human conduct data. By associating the way a human participant conducts or behaves in connection with a collection of mental categories, i.e. an event, information can be deduced about the relevance, meaning, importance and/or demarcation of a particular event in performing a task, operation or observation, specifically with respect to the human's subjective interpretation of such event.

Some forms of prior art supervised Al use labels to learn to identify, localize, differentiate between, or recommend different kinds of objects or events. This requires that humans manually provide these labels by explicitly generating descriptors for concrete pieces of data such as images, videos, text, or audio, for example.

In accordance with an embodiment of the present disclosure, wherein the at least one data processing algorithm enabling artificial intelligence comprises labels, the step of providing artificial intelligence comprises enhancing at least one of the labels based on at least one mental category.

With the present method, based on the mental categories disclosed above, such labelling is supported and performed faster for some types of descriptors, and may even provide descriptors that may not be possible to generate in any other way. The term enhancing may include creating, refinement, qualification, augmenting, ranking, et cetera of labels or descriptors used by an Al-enabled data processing algorithm.

As mentioned in the Background part above, human experts may not always be able to explicitly indicate how they perform the task or operation and on the basis of which contextual parameters or variables and their interpretation and evaluation the task or operation is performed, i.e. how a decision or result is reached. With the present method, training of the Al-enabled data processing algorithm is not limited those data that can be consciously, explicitly generated by the human.

In an embodiment of the present disclosure, operational data are provoked by the information processing device.

For example, in case the Al-enabled data processing algorithm misses information to complete a task or process at hand or is otherwise not able to process data with sufficient quality and reliability, for example, aspects of the context may be momentarily adapted by the information processing device to provoke operational data to retrieve the required or missing information. That is, an aspect or aspects of the context may be adapted by introducing, changing, or deleting information, processes, tasks, events et cetera, or by otherwise initiating a technological state change to invoke a response of the participating human, either consciously or subconsciously.

This embodiment of the present disclosure in part relies on the insight that any such provoked operational data may be perceived, attended to, or otherwise incorporated by the human, and may thus automatically provoke related human bio-signal data and/or human conduct data. Such adaptation may involve any of the momentary actions or processes handled, a momentary technological state of devices operating in the context, but also adaptations to provoke virtual operational data.

In a further embodiment of the present disclosure, operational data are provoked by the information processing device to evoke at least one mental category or at least one collection of mental categories.

That is, the evocation of operational data serves a specific purpose identified by any of the algorithms operated on the information processing device, for example the purpose to invoke a particular mental response of the participating human, for example to complete, to enhance, to investigate, to test and/or to delete a particular collection of mental categories.

As another example, operational data may be provoked to aid the learning of the Al-enabled data processing algorithm, for example when it is identified that additional data may help to update, optimize, or otherwise fulfil specific criteria of any of its internal parameters or representations.

In this way, like in humans, knowledge, proclivities, preferences, and moral values can be built up interactively by the Al-enabled data processing algorithm, even on a trial-and-error basis, both during the training of the algorithm and while performing operations in contexts to improve itself by means of interactive learning, continuous learning, and cognitive/affective probing, i.e. during the deployment of the algorithm in contexts.

Hence, among others, the Al-enabled data processing algorithm may learn to incorporate moral values, problem solving strategies, preferences, associations, distributions of degrees of acceptance, etc. such that a convergence of human and machine intelligence is initiated and continuously pursued. Over time the Al-enabled data processing algorithm may learn about the human's subjective interpretations in a bigger scale, building up a profile/model of that human's subjective interpretations within single or across multiple contexts.

By iteratively learning, provoking data, and learning from the provoked data, the Al-enabled data processing algorithm not only processes more data to become more intelligent but also, because of the provocation of specific mental categories and collections of mental categories from the human, learns to mimic the human's preferences, behaviors, interpretations, norms, and values given a respective context, thus becoming more alike in its own interpretations and actions to the human it learned from. The more data that become available from a person over time and in different contexts, the more history can build up a profile/model of that human's interpretations, knowledge, et cetera, which can be referred to as a cognitive copy.

The present method is practically applicable in various scenarios or contexts where humans interact with machines, personal computers, robots, avatars, and many other technical applications. Which type or types of bio-signal sensor is or are to be used, and/or how the sensing of human conduct data is to be performed, may be selected based on a particular context and/or a specific human participation, for example.

In an embodiment of the present disclosure, human brain activity data are processed by at least one Brain-Computer Interface, BCI, in particular at least one passive Brain-Computer Interface, pBCI, operating at least one classifier responsive to implicit human brain activity indicative of at least one mental process.

A BCI and a pBCI are tools to assess information about brain activity of an individual. A BCI, i.e. an active or reactive BCI, is built on brain activity that is generated or modulated, directly or indirectly, by a user with the intention to transfer specific control signals to a computer system, thereby replacing other means of input such as a keyboard or computer mouse.

A pBCI differs significantly from a BCI in that pBCI data are based on implicit or passive, involuntary, unintentional, or subconscious human participation with a context, different from explicit or active, i.e. conscious, voluntary, intentional, human interaction with the context. Instead of explicitly generated or modulated brain activity, a pBCI is designed to be responsive to naturally-occurring mental processes that were not intended for communication or control, but that can nonetheless be detected, decoded, and used as input to technology.

A pBCI distinguishes between different cognitive or affective aspects of a human user state, typically recorded through an electroencephalogram, EEG. An immediate neurophysiological activity of the human user in a context may be associated to the current mental state or specific aims of a user, by a respective classifier or classifiers operated by the pBCI. For the purpose of the present disclosure, multiple pBCls each operating a different classifier directed to sense different brain activity associated with different specific mental processes of a human participant may be used. In practice, tens or hundreds of classifiers may be deployed.

The method presented is not limited to the processing of operational data, human bio-signal data and human conduct data of a single human individual participating in a context, but may also be practiced for the processing of operational data, human bio-signal data and human conduct data sensed of two or more, i.e. a group of individuals participating in a respective context. In the case of driving a car, for example, artificial intelligence by the Al-enabled data processing algorithm may be acquired from both the driver of the car and a passenger or passengers.

That is, the artificial intelligence acquired, aligned, created, generated, augmented and/or modified by an Al-enabled data processing algorithm in accordance with the present disclosure may be based on the intelligence, judgement, knowledge and skills of a plurality of persons. By processing data sensed of multiple persons involved, training of an Al-enabled data processing algorithm can be significantly speeded up compared to training by a single user or the training can make use of a group consensus or a majority vote rather than individual judgements, thus making the artificial intelligence more reliable, more robust or more general, for example.

Likewise, in operation, differences in the evaluation and perception of operations and interactions among individuals of a group participating in a common context, such as differences in the mental categories and collections of mental categories among the individuals of a group, may reveal additional information for adapting the Al-enabled data processing algorithm more quickly compared to an individual user, for example.

Human bio-signal data and human conduct data may be sensed from each individual of a group separately, while operational data originating from the context may be sensed for the group as a whole, for a sub-group or for each individual separately. This, dependent on a particular context, as will be appreciated.

Note that in the case of several human individuals participating in a context these humans need not necessarily be located at a same geographic location. In such a case, some or all or a group of human individuals may participate in the context in that same is replicated or is otherwise partly or completely virtually made available to respective human individuals.

The method according to the present disclosure is excellently applicable for real-time processing operational data originating from a context, in particular a real-life context, performed by an information processing device operating at least one data processing algorithm enabling artificial intelligence processing applying mental categories, in particular mental categories mapped at a multi-dimensional mental state data space, as disclosed above, in particular for the processing of data pertaining to a time-critical context.

Because the assessed human bio-signal data and human conduct data can not only be interpreted in binary form, such as correct or wrong, accept or reject, expected or unexpected, et cetera, but also continuously, i.e. any number between 0 and 1, or even minus infinity and infinity, for example, indicating a degree of subjective perception, reaction, or interpretation related to the perceived contextual event, the method presently presented may be used to support a wide variety of Al-enabled data processing algorithms for handling plural tasks in contexts with intelligence proportional to human general intelligence.

Hence, the at least one Al-enabled data processing algorithm operated for the purpose of the present disclosure may be any suitable data processing algorithm known in practice, such as but not limited to data processing algorithms based on (deep) reinforcement learning paradigms such as Q learning or Policy Gradient learning, or any supervised learning approach such as Support Vector Machines, Linear Discriminant Analysis, Artificial Neural Networks backpropagation learning, or unsupervised learning based of clustering or principal component analysis or other probabilistic methods, Transformer architectures, et cetera. The present method provides a tool to automatically provide artificial intelligence by assessing a human's interpretation of a perceived event in a given context, in real-time or quasi real-time after the occurrence of that event. This tool provides for both continuous and event-related monitoring of the mental processes of the human and allows an automated view in the subjective, situational observation and interpretation of a person and allows to make this information available for further processing, such as to transfer key aspects of the cognition and mindset of a human into a machine.

Building up on this, it is found that through interactive learning the artificial intelligence can home in on and converge to particular aspects of the human mindset, reflecting this person's strategies, interpretations, preferences, intelligence and moral values, for example. And the more data that become available from a person over time and in different contexts, the more history can be built-up, and a better match to that one person's intuitive intelligence is established, building up a profile/model of that human's subjective interpretations, that can be referred to as a cognitive copy.

The previously mentioned ability of the Al-enabled algorithm to provoke data is particularly useful for this purpose of homing in on and converging to specific aspects. This may furthermore make use of an additional ability to repeat certain steps until specific criteria are met.

In accordance with an embodiment of the method according to the present disclosure, the information processing device is arranged for repeating the steps referring to identifying mental processes, assigning mental categories, and providing the artificial intelligence each time based on a differing selection of the collected data, until a result of human participation with the context and a result of operating with the context by the at least one data processing algorithm enabling artificial intelligence applying the mental categories match within predefined criteria. An embodiment of the present data processing method, implemented in an information processing device operating an Al-enabled data processing algorithm, comprises the steps of:
- collecting, by the information processing device, simultaneously sensed operational data originating from a context and human bio-signal data and human conduct data relating to human participation with this context;
- selecting, by the information processing device, based on at least one of the human bio-signal data and human conduct data, related operational data;
- assigning, by the information processing device, based on at least one of the human bio-signal data and human conduct data, a plurality of mental categories, a mental category comprising part of the selected operational data associated with at least one of the human bio-signal data and the human conduct data corresponding to that mental category;
- forming, by the information processing device, a collection of mental categories, wherein a collection of mental categories is at least one of a set of operational data associated with mental categories and a set of collections of mental categories;
- comparing, by the information processing device, a result of participating with the context by the human with a result of operating with the context by the at least one data processing algorithm enabling artificial intelligence based on the collection of mental categories formed;
- repeating, by the information processing device, the steps of assigning, forming and comparing until compared results match within predefined criteria, and
- providing, by the information processing device, based on matching results, artificial intelligence enabling the at least one data processing algorithm to process operational data originating from a context representing human participation with the context.

Those skilled in the art will appreciate that the information processing device may operate multiple data processing algorithms, such as but not limited to a data processing algorithm for performing the steps of collecting, selecting, assigning and forming, and another separate data processing algorithm for performing the steps of comparing and providing artificial intelligence.

The assigning may comprise several intermediate steps like sorting, grouping, and performing a mental assessment of the data, that is identifying or decoding mental processes, identifying or decoding mental states from multiple simultaneous mental processes, and constructing an MDMS data space, for example, in accordance with the present disclosure.

Besides a single information processing device, parts of the processing of data according to the present method may be performed by multiple cooperating information processing devices, including so-called virtual machines, and information processing devices located at different geographic locations, which processing is deemed to be covered by the scope of the Claims.

Following the method presented, in case the information processing device operates multiple algorithms as indicated above, all such algorithms may be Al-enabled data processing algorithms.

In a second aspect, the present invention comprises a data processing algorithm comprising artificial intelligence provided in accordance with the data processing method disclosed in conjunction with the first aspect above. That is, a trained Al-enabled data processing algorithm.

In a third aspect, the present invention provides a program product, comprising instructions stored on any of a transitory and a non-transitory medium readable by an information processing device, which instructions arranged to perform the method according to any of the embodiments disclosed above when these instructions are executed by an information processing device operating at least one Al enabled data processing algorithm, including any of a computer and a computer application.

It is a further object of the present disclosure to deploy a data processing algorithm comprising artificial intelligence obtained by the data processing method disclosed in accordance with any of the first, second and third aspects above.

Accordingly, a fourth aspect of the present invention relates to a method of real-time processing operational data originating from a context, in particular a real-life context, the method performed by an information processing device operating a data processing algorithm comprising artificial intelligence provided in accordance with any of the embodiments disclosed above.

This fourth aspect of the present invention relates to the actual use of a trained or learned Al-enabled data processing algorithm, by processing sensed operational data only and not requiring human bio-signal and human conduct data, while performing or handling a task, an operation or observation in a context based on the knowledge and skills of a human expert reflected in the artificial intelligence provided by the Al-enabled data processing algorithm. That is, the operational data are processed representing human participation with the context.

Thus, in this aspect of the present disclosure, no human bio-signal data and/or human conduct data are required, although same may still be available, while the mental categories and collections of mental categories that have previously been formed continue to be used by the Al-enabled data processing algorithm, for example to provide internal representations of the operational data.

The artificial intelligence already provided by the Al-enabled data processing algorithm may, in accordance with a further aspect of the present disclosure, be modified by the information processing device based on operational data originating from the context.

For example, when operational data from the context indicate an error, conflict or other controversy in the performance of an operation or task, et cetera, by the information processing device operating the trained Al-enabled data processing algorithm, the artificial intelligence of the Al-enabled data processing algorithm may be corrected, updated, enhanced, or otherwise modified by the information processing device.

In a fifth aspect the present invention provides a data processing system, comprising means arranged for performing the data processing method disclosed in conjunction with the first, second and third aspect above. In general such a processing system includes at least one information processing device arranged for operating at least one Al-enabled data processing algorithm, equipment in data communication with the information processing device for sensing operational data originating from a context, human bio-signal data and human conduct data of a human participating in that context.

The present disclosure provides a mechanism that assesses, correlates, outputs, or provides other products of human objective, subjective and intuitive intelligence, directly and automatically, optionally making use of but not explicitly requiring actions from a human participating in a given context.

Using the methods outlined above, this allows aspects of human intelligence, such as used strategies, skills, categories, and logical reasoning, for example, to be learned by or otherwise transferred to an Al-enabled data processing algorithm - such as in the form of labels, weights, connections, neural network structure, model topology, functions, representations, meta parameters, decision trees, or descriptors - which can then reproduce such aspects autonomously, without requiring the participation of the human.

The use or involvement of bio-signals not only allows subconscious, intuitive, or otherwise automatic aspects of intelligence to be revealed and included, it also significantly improves ease of use and comfort to participate in an Al training context by a human user, but also avoids cognitive overload or any distraction from the ongoing context by possible complex to understand Al training or learning scenarios and instructions, for example.

The data input to the Al-enabled data processing algorithm is neither limited those data that can be consciously, explicitly generated by the human. The method presented may significantly speed up training and operation of an Al-enabled data processing algorithm compared to the training of Al-enabled data processing algorithms requiring explicit user actions, for example.

In a sixth aspect the present invention sees to using mental categories for providing artificial intelligence by an information processing device operating at least one data processing algorithm enabling artificial intelligence.

The present method, system, and program product results in what is called a Situationally Aware Mental Assessment for Neuroadaptive Artificial Intelligence, SAM AN Al, tool that by which an Al-enabled data processing algorithm may provide artificial intelligence from a human brain directly in contexts, environments or scenarios wherein the human participates, which contexts may comprise multiple sources of information, processes, tasks, events, etc.

This SAMANAI tool can be applied for increasing the learning rate of an Al-enabled data processing algorithm by integrating preprocessed evaluation of the human mind, with the effect that the learning will be quicker and less erroneous than using human input through Al training or learning scenarios and instructions button presses.

The SAMANAI tool can be applied to personalize any Al-enabled data processing algorithm, either a strong or weak Al, by assessing subjective and/or moral human values used in a given context environment and creating mental categories to be incorporated into the Al-enabled data processing algorithm, for future decision making in solving or completing a task, operation, or any type of handling based on these human values.

The SAMANAI tool enables context dependent valuations, interpretations, assertions, labelling, etc. by the Al-enabled data processing algorithm of operational data in contexts or environments, handling multiple, versatile, and non-predefined tasks.

As an untrained Al-enabled data processing algorithm is incapable of evaluating the world on its own, by definition, SAMANAI provides information to the learning process that would not be available otherwise.

The above-mentioned and other aspects of the present disclosure are further illustrated in detail by means of the figures of the enclosed drawings.

### Brief Description of the Figures

Figure 1 illustrates, schematically, an example of a general set-up for practicing the present disclosure, both for training purposes and deployment in a simulated or real-life operational application.
Figure 2 shows an example electrode placing of a passive brain-computer interface for registering brain activity signals based on electroencephalography, which can be used for operating the method according to the present disclosure.
Figures 3 - 7 illustrate, schematically, an example based on the method according to the present disclosure.
Figure 8 shows, in a graphical illustration, an example comparison of the performance of the method according to the present disclosure compared to prior art Al training methods, for the example illustrated of Figures 3 - 7.
Figure 9 illustrates, schematically, in a process type diagram, steps of an embodiment of the method according to the present disclosure.

### Detailed Description of the Figures

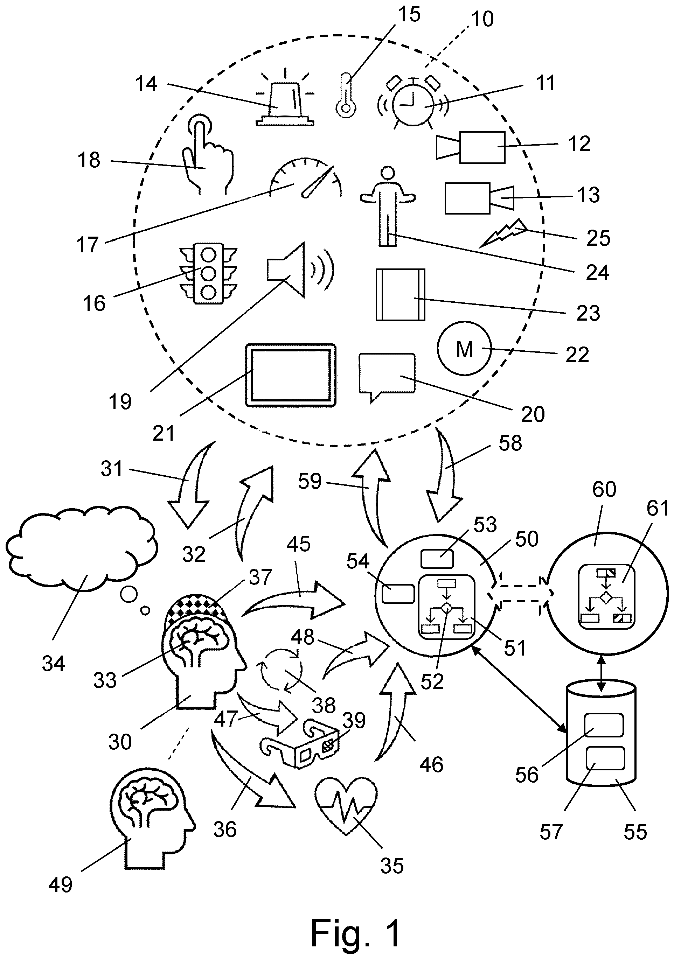

In Figure 1, reference numeral 10 schematically represents a particular context, or environment, illustrated by a dashed line, typically composed of a plurality of devices performing and handling multiple operations and producing operational data.

Non-limiting examples of such devices are audible alarms, illustrated by an alarm clock 11, sensing camera's such as a daylight camera 12 and/or a night vision InfraRed, IR, camera 13, lighting devices 14, including flashing lights, temperature sensors or meters 15, traffic lights 16 and speedometers 17 in case of a driving vehicle context, for example, (virtual) buttons, keys or knobs 18 to be operated, audio equipment 19, message systems 20 presenting spoken, written or video messages, a display or displays 21, and one or more actuators represented by a motor 22.

Reference numeral 23 represents a software application, for example control software, simulation software, communication software, or so-called apps, also producing operational data.

Reference numeral 24 refers to at least one organism or living being, such as a person or persons, or an animal or animals acting in the context 10. In the light of the present disclosure, the organism or living being forms part of the context 10 and acts performed by, and behavior observed from, such an organism or living being are treated as operational data originating from the context 10.

It is noted that operational data in the light of the present method also refers to environmental information, such as a weather forecast, schematically represented by reference numeral 25.

It will be appreciated that in practice a certain context may be comprised of more or less of the above-mentioned devices or other devices, software, organisms or living beings like animals, for example. In practice, the devices 11-23 are also generally called objects, while organisms or living beings 24 are generally referred to as agents.

Reference numeral 30 refers to a human participant, such as a human expert, participating in or with the context 10. The manner and degree of participation or involvement of the human 30 may vary dependent on a respective context. In some scenarios the human 30 will only perceive actions and events occurring in a context 10 and has no control over the devices, for example, while in other scenarios the human 30 is also actively involved in the operations occurring in the context 10, such as pushing buttons 18, turning on lights 14, evoking alarms 11, etc.

Curved arrows 31, 32 schematically represent the human participation. Arrow 31 illustrates the perception of the context 10 by the human 30 and arrow 32 illustrates active interaction of the human 30 with the context 10, i.e. the human 30 is in charge with and/or controls tasks, processes and operations that occur in the context 10 and/or need to be accomplished.

Events, changes, adaptations, modifications etc. that happen in or in relation with the context 10, although not particularly focused on, may nevertheless attract attention, arousal or may otherwise be noticed 31 by the human 10, consciously or subconsciously.

Reference numeral 50 refers to an information processing device, typically including a computer, a computing device, a virtual machine, a server, or a plurality of cooperatively operating computers, computing devices, virtual machines, or servers, either operating stand-alone or on-site and/or in a cloud computing environment possibly at different geographic locations (not specifically illustrated).

The information processing device 50 operates at least one data processing algorithm 51 enabling artificial intelligence, hereinafter also referred to as an Al-enabled data processing algorithm, and is arranged for processing a plurality of operational or contextual data acquired from the devices, objects, environment, organisms and/or living beings 11 - 25 operating in the context 10.

Acquisition of operational data from the context 10 is illustrated by a curved arrow 58. Operational data for controlling, by the information processing device 50, of one or more of the devices operating in the context 10 is illustrated by a curved arrow 59.

Those skilled in the art will appreciate that the devices, objects, environment, organisms and/or living beings 11 - 25, when operating in the context 10, are in data communication with the information processing device 50, either via an individual or shared wired, wireless or cloud or internet data communication connection, for example operating an Internet-of-Things, loT, a WiFi, a Bluetooth^{™} or any other known data communication protocol.

Bio-signals 33 of the human 30 participating with or in the context 10, including but not limited to electrical and non-electrical time-varying signals comprising any of human body bio-signals and measurements of human physiological structure and function, may be obtained from commercially available sensors or sensing devices 35, operatively connected to or directed at the human 30, as represented by curved arrow 36.

Reference numeral 35 generally represents bio-signal sensors or devices for use with the present disclosure and include direct and indirect measurements of electro cardiac activity, body temperature, eye movements, pupillometric, hemodynamic, electromyographic, electrodermal, oculomotor, respiratory, salivary, gastrointestinal, and genital activity.

The term indirect measurements here also can refer to derivate measures of bio-signals, including physiological parameters such as heart rate variability, gaze, peak amplitudes, power in specific frequency bands, and signal rise and recovery times, for example.

The bio-signal sensors 35 are in data communication with the information processing device 50, as illustrated by curved arrow 46. The data communication 46 and/or the connection 36 to the human 30 may operate either via an individual or shared wired, wireless or cloud or internet data communication connection, for example operating an Internet-of-Things, loT, a WiFi, a Bluetooth^{™} or any other known data communication protocol.

Brain waves and other measures of brain activity are also bio-signals for the purpose of the present disclosure. Brain activity signals 33 of the human 30 participating with or in the context 10 may be provided by Brain-Computer Interface, BCI, in particular a passive Brain-Computer Interface, pBCI. In the embodiment shown, a pBCI is illustrated in two parts that are in data communication with each other, illustrated by a curved arrow 45 representing brain activity data of the human 30.

That is, a hardware part 37 for registering brain activity signals 33 of the human 30, such as a plurality of electrodes attached to the human head in the case of an electroencephalogram, EEG, and a software part 54 running on the information processing device 50 and operating one or a plurality of classifiers or classification algorithms for processing the raw brain activity signals received from the hardware part 37 of the pBCI. Commercially available pBCI software 54 for use with the present method is known as BCILAB and OpenViBE, for example.

It is noted that the human bio-signal data communicated 46 to the information processing device 50 may likewise be processed by one or a plurality of classifiers or classification algorithms arranged for processing the bio-signal data 46 received from the bio-signal sensors 35, and also using commercially available software operated by the information processing device 50.

Electroencephalography is a well-known electrophysiological monitoring method to record electrical activity on the scalp representing the activity of the surface layer of the brain underneath. It is typically non-invasive, with the electrodes placed along the scalp.

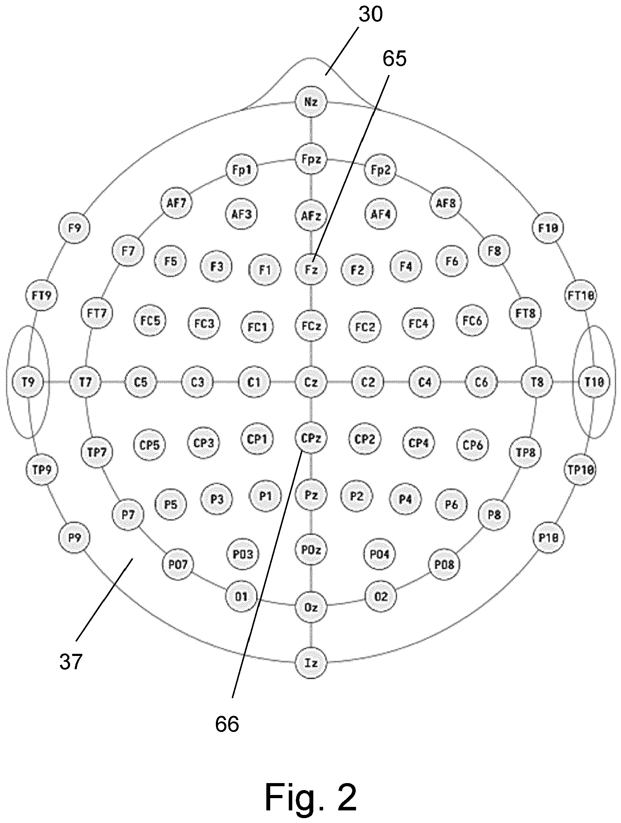

Figure 2 shows a typical electrode placing of the hardware part 37 of a pBCI for registering brain activity signals based on EEG and used for operating the present disclosure. The Hardware part 37 comprises several electrodes which are depicted as numbered small circles, such as circles 65, 66.

Instead of or in addition to recording brain activity data 45 by EEG or intracranial EEG, other recording techniques suitable for the purpose of the present disclosure are Magnetoencephalography, MEG, a functional neuroimaging technique for mapping brain activity by recording magnetic fields produced by electrical currents occurring naturally in the brain, functional Near-InfraRed Spectroscopy, fNIRS, that is a functional neuroimaging technique based on brain hemodynamics, functional Magnetic Resonance Imaging, fMRI, that measures brain activity by detecting changes associated with blood flow, or ElectroCorticoGraphy, ECoG, a type of electrophysiological monitoring that uses electrodes placed directly on an exposed surface of the brain, i.e. not on the scalp, to record electrical brain activity.

By the above-mentioned techniques, pBCI data are provided based on implicit or passive human participation, different from explicit or active, i.e. voluntary, intentional, conscious, human interaction with the context 10.

Measurements of the physiological state of the human 30 can be continuously monitored from the brain activity signals 33, for example by the pBCI 37, or a separate pBCI (not shown), as well as from measurement data provided by sensors and devices 35 attached or operatively connected to the human 30. In practice, prior to registering bio-signal data, a calibration procedure may have to be applied.

Human conduct data may be monitored or sensed by a number of commercially available sensors operatively connected with and/or aimed at the human participant 30, i.e. worn by or aimed at the human participant, as illustrated by curved arrow 47. Reference numeral 38 refers to a body motion sensor and reference numeral 39 refers to eye-tracking equipment. Other examples of human conduct data sensors or device for sensing human conduct data include but are not limited to input modalities comprising a keyboard, push buttons, switches, touch screen, mouse, joystick, electronic pencil/stylus, laser pointer, motion controller, game controller, microphones, cameras, thermal imagers, motion capture devices, pressure sensors, gyroscopes or other equipment for signaling a selection or decision for example.

Data communication of the human conduct sensors 38, 39 with the information processing device 50 is schematically illustrated by curved arrow 48. The data communication 48 and/or the connection 47 to the human 30 may operate either via an individual or shared wired, wireless or cloud or internet data communication connection, for example operating an Internet-of-Things, loT, a WiFi, a Bluetooth^{™} or any other known data communication protocol.

It will be appreciated that the bio-signal sensors and human conduct sensors shown in Figure 1 and discussed above are just examples of suitable sensors and any other or future bio-signal sensor and/or human conduct sensor may be applied with the present disclosure. Brain activity signals, for example, may also be sensed using so-called cEEGrid sensors as a hardware part of a pBCI. These sensors are commercially available and are designed to be easily placed by the user around their ears and on the forehead, allowing for more flexible use in a variety of settings. Theses sensors show a comparable data quality to standard EEG sensors using electrodes placed along the scalp.

Those skilled in the art will appreciate that the information processing device 50 may operate plural Al-enabled data processing algorithms 51 and/or plural algorithms for simultaneous sensing or collecting data of sensors 35, 36, 37, 38, 39 and input/output of operational data 58, 59, processing and pre-processing in real-time or quasi real-time, and time-synchronization, in particular in a time critical context.

That is, processing of at least one of human bio-signal data, operational data, and human conduct data using so-called classifiers or classification algorithms for identifying or decoding mental processes, mental states, constructing a Multi-Dimensional Mental State, MDMS, data space and assigning mental categories providing artificial intelligence for the Al-enabled data processing algorithm 51, i.e. the part 52 thereof, by applying mental categories in accordance with the present disclosure.

Suitable classifiers or classification algorithms are commercially available or may be derived from experiments or test data, for example,
The information processing device 50 may be arranged as well for adapting aspects of the context 10, such as controlling the alarms 11, lighting 14, audio equipment 19, actuator(s) 22, etc. or purposely inducing or evoking probes and to evoke a response from the human 30, such as to evoke at least one mental category or a collection of mental categories, i.e. for the purpose of interactive learning, as explained in the Summary part above. In figure 1, such algorithms are collectively referred to by refence numeral 53.

For completeness's sake, reference numeral 55 represents a database or data repository or any other type of memory devices for storing data acquired and processed by the information processing device 50, such as is generally known. The database may be fully or partly located externally from the information processing device 50, for example remote in a cloud computing environment or data center, and/or be fully or partly located internally with the information processing device 50.

The database 55 may contain files, lists, libraries, or any other assembly of information for use in the processing of data according to the present disclosure, in particular data pertaining to mental categories and/or collections of mental categories, as generally designated by block 56 and MDMS data space information, generally designated by block 57. As disclosed in the Summary part above, the more data that become available from a person over time and in different contexts, the more history can build up a profile/model of that human's interpretations, knowledge, et cetera that can be referred to as a cognitive copy, which may be stored in the database 55.

When the information processing device 50 operates multiple algorithms 53 as described above, potentially all such algorithms may be adapted based on the data processing performed in accordance with the present method, inclusive adaptation of multiple operated Al-enabled data processing algorithms 51, and data storage 55 and respective contexts.

Operational data 58, 59 may comprise physical data produced by or for the control of physical devices, equipment, sensors, etc. in the context 10, such as technological device states like device input states, device output states, device operational states, device game states, computer aided design states, computer simulated design states, computer peripheral device states, computer-controlled machinery states and respective state changes, and acts performed by and behavior observed from an organism or living being, as well as so-called virtual operational data originating from the context 10. The latter are data relating to, for example, the software program or software application 23 operating in the context 10, and/or data received from the camera's 12, 13, for example, or any other sensor operating in the context 10.

The set-up discussed above is representative for both a real-life or real-world operational context 10, that is a non-predefined or authentic context or environment occurring in reality or practice, and a cognitive probing context 10.

Referring to the Summary part above, the present disclosure provides for a continuous and event-related monitoring of the human mindset and mental processes of the human and allows an automatic view into the knowledge, intelligence, moral values, subjective and situational interpretations as well as human advise about tasks, processes, devices, and information perceived by the human.

In Figure 1, the human mindset, intelligence, strategies, skills, logic, values, subjectivity, objectivity, mental processes and mental states, et cetera, are very schematically illustrated by the brain cloud 34.

Although a single human 30 is referred to in Figure 1, those skilled in the art will appreciate that the set-up presented is feasible for more than one human participating in or with the context 10, such as a group of people, by simply replicating any or all of the sensors 35, 37, 38, and using processing software adapted accordingly, for example. Schematically indicated by the further human 49.

It is noted that the human 49 may be located at the same or a different geographical location compared to the human 30. In the latter case, the human 49 may participate in the context 10 in that same is replicated or is otherwise partly or completely virtually made available to the human 49 or a group of humans 49.

The present disclosure also comprises a program product comprising instructions stored on any of a transitory and a non-transitory medium 60 readable and executable by an information processing device 50 operating at least one data processing algorithm enabling artificial intelligence, such as a computer or a computer application.

The disclosure further provides a data processing algorithm comprising artificial intelligence provided in accordance with the present method disclosed above, generally referred to by reference numeral 61. The trained data processing algorithm 61 may be stored on any of a transitory and a non-transitory medium 60 readable and executable by an information processing device, as illustratively shown in Figure 1.

As will be appreciated, for an actual deployment of the trained Al-enabled data processing algorithm 61, participation of the human 30, 49 and hence the human bio-signal and human conduct data sensors 35, 37, 38, 39 are not required. The trained Al-enabled data processing algorithm may operate, handle, perform and complete an operation or task in any of a real-life or probing context 10 in real-time or quasi-real time from obtaining operational data 58 as discussed above.

However, for improving, updating, enhancing, augmenting or otherwise training or learning an already trained Al-enabled data processing algorithm the set-up discussed above may be used in a same manner as disclosed, provided that the Al-enabled data processing algorithm 51 is an already (partly) trained Al-enabled data processing algorithm.

As will be appreciated, in accordance with the present disclosure, in addition to and/or in combination with the artificial intelligence provided, acquired, aligned, created, generated, augmented and/or modified from human participation, the information processing device may also provide, acquire, align, create, generate, augment and/ or modify artificial intelligence of the Al-enabled data processing algorithm from operational data sensed from the context, i.e. originated from the context, in both training and deployment of an already trained Al-enabled data processing algorithm.

For example, when operational data from the context indicate an error, conflict or other controversy in the performance of an operation or task, et cetera, by the information processing device, the artificial intelligence of the Al-enabled data processing algorithm may be corrected, updated, enhanced, or otherwise modified by the information processing device. That is, even when no human takes part in the deployment of a trained Al-enabled data processing algorithm.

As an example, Neuroadaptive Category Learning, NCL, in accordance with the present disclosure may be used to provide artificial intelligence in the context of automotive applications. Current and future fully or partially autonomously driving vehicles, e.g. "self-driving cars", may be equipped with any number of sensors to perceive objects, facts, quantities, properties, and other aspects and elements present in a context 10, both inside and outside of the vehicle.

For example, cameras, lidar, radar, sonar, thermometers, inertial measurement units, GPS, as well as virtual data provided using, e.g., maps or other location-based databases may provide the vehicle's data processing algorithms, operated by the information processing device 50, with large quantities of operational data 58 concerning the vehicle's internal and external environment.

A human occupant 30 may be present in this vehicle, either actively controlling the vehicle, or as a passenger, for example. Alternatively, the human 30, or a second human 49 in case the human 30 controls the vehicle directly, may be present at a different geographic location with the vehicle's captured operational data 58 being relayed to them in an appropriate manner, as disclosed above.

At either location, additional sensors 38, 39 may capture human conduct data 48 inside the vehicle, such human conduct data 48 may, for example, consist of looking, braking, acceleration, and steering behaviors, whereas at an external location, human conduct data 48 may represent focus on the explicit identification, or labelling, of contextual elements, the approval or disapproval of certain behaviors of, for example, a human 30 controlling the vehicle, or the labelling of temporal sequences, as well as looking, for example.

The human or humans in question will simultaneously be equipped with bio-sensors, such as EEG 37 and heart rate sensors 35, to capture their bio-signal data. As such, this set-up provides for the simultaneous acquisition of operational data 58 from a context, human bio-signal data 46, and human conduct data 48.

Because of the presence of bio-signal sensors, all of the operational data can be associated, by the information processing device 50, with corresponding bio-signal data and/or human conduct data. Based on these bio-signal data and/or human conduct data - by the information processing device 50 - mental categories can be formed that represent various patterns present in the bio-signal data and/or human conduct data, such as patterns representing various mental states, or patterns representing various responses to specific parts of operational data. As such, each part of operational data is associated with at least one mental category. This association provides additional information concerning each part of operational data that could not have been obtained from the operational data alone, but relies on the availability and joint processing of at least the operational data and the human bio-signal data, imparting at least part of a human interpretation to the data and thus to the Al-enabled data processing algorithm using this data.

Once mental categories have been formed and sufficiently representative operational data has been collected, an Al-enabled data processing algorithm learns to interpret the operational data in terms of these mental categories directly, no longer needing the human bio-signal data and/or human conduct data. This approach thus provides a method to represent operational data based on mental categories, initially formed based on human bio-signal data and/or human conduct data, enabling an Al-enabled data processing algorithm to use this same representation during deployment.

Furthermore, in the setup described above, it will be possible for an algorithm operated by the information processing device 50 to select specific parts of the operational data based on their associations with, or information obtained from, the other data sources.

For example, when based on human conduct data 48, only operational data parts may be selected that, for example, correspond to gaze fixations, were gathered less than five seconds before specific human actions were performed, or were explicitly identified by a human in the course of labelling.

These selected operational data parts may additionally be represented in a collection of mental categories along with the corresponding conduct data that informed the selection, as well as the associated mental categories.

Similarly, selections of operational data may also be performed based on their associated mental states. For example, only operational data parts leading up to mental "error" states may be selected, or data parts comprising mental "high workload" states, or data parts following the identification of "fatigue". This allows a selection to be made by the information processing device of operational data parts that are difficult to identify based on operational properties but can be easily and uniquely identified by a human.

For example, data parts can be selected, and collections of mental categories can be formed that are associated with mental categories representing perceived risk. When combined with additional Al generation steps, this approach provides a method to teach an Al-enabled data processing algorithm to recognize operational data representing risk.

The mental categories defined in this way can, using a supervised training machine learning paradigm, be used to teach an Al-enabled data processing algorithm to predict a risk measure associated with the operational data, for example. The training paradigm is minimizing the mismatch between the model prediction of the mental categories and the true categories defined above. In this way an Al-enabled data processing algorithm can be trained that is able to provide more meaningful labels that include a risk measure, for example.

This new labelling dimension represents a new interpretation of the operational data which involves the internal logic of a human brain and can be used in a larger Al system that is built with the purpose of autonomously steering a vehicle. Usually the goal for the latter Al is to achieve a performance that is better than the average human driver in terms of driving safety.

As another example of NCL in accordance with the present disclosure, a predetermined mental category may be used to represent any number of aversive psychological states. Collections of mental categories can then be formed of operational data leading up to, or comprising, those psychological states. Based on these collections of mental categories, an Al-enabled data processing algorithm that is already capable of safe driving, for example an Al-enabled data processing algorithm achieved using the method according to the present disclosure, may be further adapted, using a reinforcement learning training paradigm, to specifically avoid operational situations that lead to aversive psychological states, or conversely, to promote operational situations that lead to positive psychological states.

Among other things, this approach would allow an Al-enabled data processing algorithm to be adapted to the mental experiences of a specific human driver. Additionally, this approach may be used to add reactive driving functionality such as for instance "emergency braking" to an autonomous Al pilot by teaching this Al pilot to take evasive actions based on the metal category or risk associated with the currently analyzed operational data.

As another example application, NCL in accordance with the present disclosure is advantageous in sleep stage identification, also known as sleep scoring. Sleep stage identification plays a crucial role in the evaluation of sleep and its disorders. It is commonly evaluated using polysomnography (PSG). A PSG study involves the recording of electroencephalogram (EEG), electrooculogram (EOG), electromyogram (EMG), and other signals such as respiration, during sleep. The recorded data is then analyzed by expert PSG analysts who, through years of practice, are capable of quickly and flexibly integrating information from the multi-modal data and identifying the sleep patterns of their patients. While manuals exist that provide explicit guidelines on sleep stage evaluation, e.g. provided by the American Academy of Sleep Medicine, experts often report that they have developed a feeling, an intuition, that helps them identify the patterns. They use their own internal language, their own interpretations, and their own unique mental strategies to analyze the data and make their judgements. Importantly, while they are aware of having these strategies, they are often unable to verbalize them.

The present NCL provides a unique approach to assessing these internal mental strategies and copying them into an Al.

While performing a task by an expert 30 in sleep stage identification the context data 58, 59 and the expert's bio-signal data 46 and conduct data 48 are being simultaneously tracked by the information processing device 50, while constructing his or her MDMS data space 57. By synchronously assigning and recording the MDMS data space 57 and the context data 58, 59, the two can be associated with each other. Importantly, the context data 58, 59 in this study includes the patient's PSG that the expert 30 is analyzing. Thus, specific sections of the PSG can be associated with the expert's mental interpretation of that section.

For example, a specific K-complex or a particular sleep spindle will elicit different mental responses than others. Even as the expert may not be able to verbalize these differences, they will be revealed through the MDMS.

Then, by assigning mental categories to the constructed MDMS data space and context information, an Al can be trained that makes direct use of our expert's own interpretations of the various PSG features. This can be seen as a set of additional, meaningful labels that NCL provides to the Al, based directly on the expert's brain activity.

Once trained using NCL, for validation purposes, the sleep stage identification output of this Al applied on a separate test dataset may be compared to the expert's own judgements or may be compared to commercially available state-of-the-art AI sleep stage identification algorithms.

The present NCL technique may also be applied with Large Language Models, LLM, mentioned in the Background part. By monitoring the cognitive and affective states of users through passive brain-computer interfaces, NCL allows the language model to recognize the mental state of the user and adjust its responses and behavior accordingly. For instance, if the user is frustrated or confused, the language model can be trained to provide more helpful and context-specific suggestions or explanations. By integrating inference on mental categories derived by NCL into an artificial intelligence language model, the system can offer more personalized and effective answers and support to users, resulting in a more positive and productive interaction. This, in turn, can boost user satisfaction and adoption of the system, while also improving the accuracy and quality of the system's responses. Moreover, the language model continues to learn and adapt and can evolve into a more valuable tool that aligns with human values, supporting businesses and organizations in various tasks and scenarios.

The above-mentioned examples are not limitative for the use of NCL. Those skilled in the art will be able to apply NCL in accordance with the present disclosure in a variety of other applications.

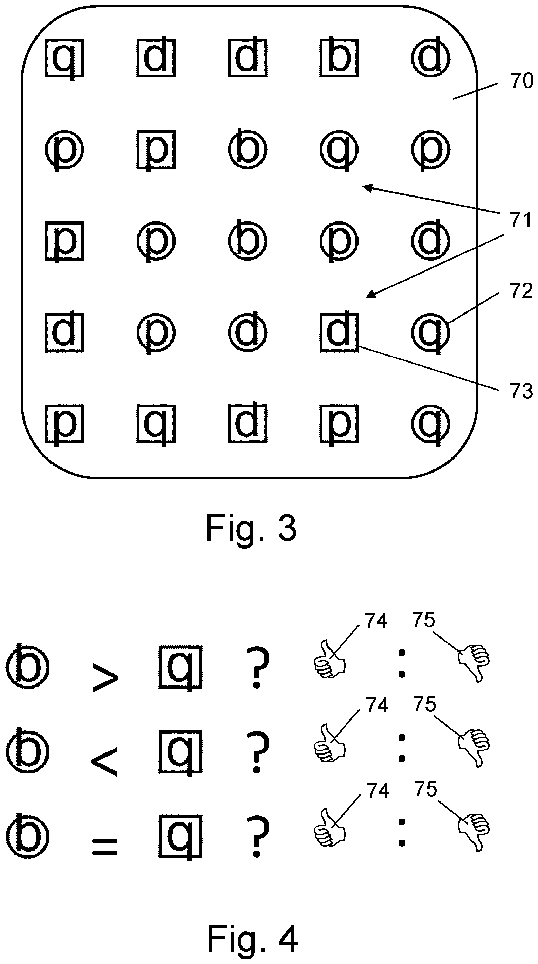

Figures 3, 4, 5, 6 and 7 illustrate an example to further clarify the NCL method according to the present disclosure. With reference to Figure 1, in this example, a human individual 30 has to perform a task that is comprised by elements displayed at the display 21. In the sense of the present disclosure, these elements represent operational data 58.

Human bio-signal data from the human individual 30, obtained by the information processing device 50, comprise brain activity signals, recorded by a pBCI 37, 45, 54 as illustrated and disclosed above in conjunction with Figure 1 and Figure 2. Human conduct data of the individual 30 are obtained by the information processing device 50 from eye tracking data 48, using eye tracking equipment 39. That is, through the eye tracking equipment 39 the information processing device 50 is informed at which part of the operational data 58 momentarily displayed at the display 21 the human 30 is looking at, i.e. task-relevant behavior of the human 30.

With reference to Figure 3, in this example, a grid 70 of 25 elements 71 is displayed at the display 21 and visible to the human 30. Each element 71 consists of a written character surrounded by either a circle or a square. That is, an element 71 has two dimensions, i.e. it is either a circle 72 or a square 73 as a first dimension, and one of a written character b, d, p or q as a second dimension.

The task to be performed by the human 30 is to look at the elements 71 and to decide for the grid 70 as a whole whether or not this is a good or a bad grid or display, or a type one or a type two grid or display, for example. That is, the human 30 has to perform a decision-making task, classifying the grid 70 as belonging to a first or a second different class.

The human 30 is given or may come up with a specific way or rule to classify the grid 70, as schematically illustrated in Figure 4. For example, if the grid 70 contains more b's in a circle than q's in a square, as indicated in Figure 4 top part, it is a "good" or type one grid 70 or display, otherwise it is a "bad" or type two grid 70 or display, respectively indicated by a thumb-up symbol 74 or a thumb-down symbol 75.

This rule is completely arbitrary and can be turned around, for example, as indicated in Figure 4 middle part, i.e. if there are fewer b's in circle than q's in a square, it is a good or type one grid 70, i.e. thumb-up 74, and otherwise it is a bad or type two grid 70, i.e. thumb-down 75.

Another rule may be, for example, if there is an equal number of b's in a circle and q's in a square, as shown in Figure 4 bottom part, it is a good or type one grid 70, i.e. thumb-up 74, and otherwise it is a bad or type two grid 70, i.e. thumb-down 75.

The rule can be made even more complicated, such as if there are more b's in a circle than q's in a square and if there are fewer than five b's and at least two q's it is a good or type one grid and otherwise it is a bad or type two grid. (Not shown).

Important is that the information processing device 50 operating the at least one Al-enabled data processing algorithm 51 is not informed about the decision rule applied by the human 30. That is, the human 30 has some strategy to perform the task but the information processing device 50 does not know this strategy.

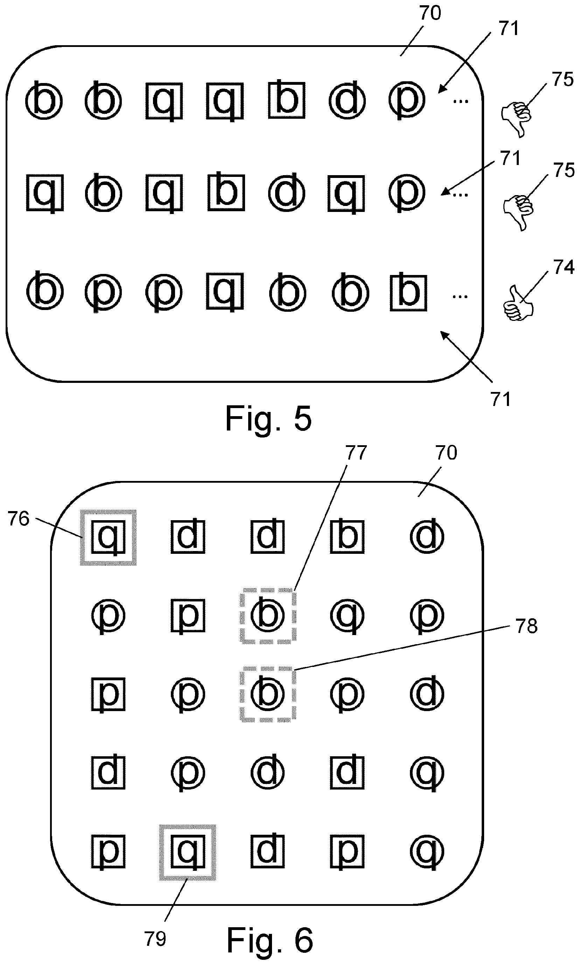

Using known or traditional learning or training techniques for training an Al-enabled data processing algorithm, such as but not limited to a machine learning algorithm based on reinforcement learning allowing to acquire artificial intelligence from trial and error, or using deep reinforcement learning, the Al-enabled data processing algorithm can be taught the applicable decision rule and to perform the task by giving the raw data to the algorithm, as illustrated in Figure 5.

That is, the Al-enabled data processing algorithm is informed about all the elements 71 in the grid 70, along with the final decision made for each grid 70, for example by the person `telling' the information processing device, i.e. the Al-enabled data processing algorithm, for each grid, whether it is a good or bad grid 70 or a type one or type two grid 70, for example.

For example, the top part of Figure 5 representing a grid 70 comprising 25 elements 71 (not all shown in the figure) is classified by the human 30 as a bad or type two grid, i.e. thumb-down 75. The middle part of Figure 5 representing a grid 70 comprising 25 elements 71 (not all shown in the figure) is likewise classified by the human 30 as a bad or type two grid, i.e. thumb-down 75. The bottom part of Figure 5 representing a grid 70 comprising 25 elements 71 (not all shown in the figure) is classified by the human 30 as a good or type one grid, i.e. thumb-up 74, et cetera.

With the above sequence repeated many times, for example up to thousand or more times, eventually the Al-enabled data processing algorithm will be able to infer the decision rule and perform the task according to the decision rule applied by the human 30.

In accordance with the NCL method of the present disclosure, different from the traditional or known manners of Al learning or training, the artificial intelligence for the Al-enabled data processing algorithm is provided by the information processing device 50 using sensed bio-signal data and human conduct data, i.e. in this example the brain activity data from the pBCI 37, 45, 54 and the eye tracking equipment 39, respectively.

That is, as shown in Figure 6, based on the sensed human conduct data and the human bio-signal data, while looking by the human 30 at the grid 70, the information processing device 50 may detect a pattern in the bio-signal data that some elements 71 of the grid elicit different brain activity than all the other elements of the grid. For example, the elements 76, 77, 78 and 79 indicated in the grid 70 of Figure 6 elicit a different brain activity than all the other elements 70.

In this example, the pBCI 37, 45, 50 operates a number of classifiers or classification algorithms to distinguish different brain activity, i.e. different mental processes in the brain 33 of the human 30. For this example it is not known or important what type of brain activity the classifiers operate at, only that same are different and hence refer to different mental processes in the human brain. With reference to Figure 6, the elements 77 and 78, for example, may elicit a different brain activity than the elements 76 and 79.

Based on the above, in accordance with the present disclosure, mental categories may be associated with the elements 70 in the grid of Figure 6. That is, the elements 76, 77, 78 and 79 appear grouped together in one mental category, while the other elements may constitute a different second, non-overlapping mental category, with these categories essentially reflecting the fact that elements 76, 77, 78, and 79 are relevant to performing the task, i.e. used by the human to make the decision, while the others may not be relevant. And, depending on the number of classifiers and their performance accuracy, the same or a further classifier may provide a basis for the q's in a square 76, 79 to be separated from the b's in a circle 77, 78 in yet further mental categories.

As such, in this example, there may be at least four mental categories associated with the various elements 71 appearing in a grid 70: a first mental category of "irrelevant" elements which the human does not use for a decision, a second mental category of "relevant" elements 76, 77, 78, 79 which the human does use to base a decision on, and a third and fourth mental category possibly hierarchically contained within the "relevant" category that further subdivide same into q-square 76, 79 and b-circle 77, 78, respectively.

These mental categories thus reflect the different meaning these elements have to the human 30 in solving the task, based on the decision rule applied. It is repeated that the decision rule applied by the human 30 is not known to the information processing device 50, is essentially arbitrary for the purpose of this example, and that the above designations referring to specific elements 76, 77, 78, and 79 as informing the decision are similarly arbitrary.

The mental categories may be named or labelled based on the type of human bio-signal data or human conduct data corresponding to a respective mental category.

Now having established different mental categories, same can be input into the Al-enabled data processing algorithm 51, such that the Al has more information and forming a different perspective than with the traditional Al learning illustrated above with reference to Figure 5.

Different from the set up disclosed with the example above, in which the mental categories are formed by the information processing device from the related operational, human bio-signal data and human conduct data sensed, the information processing device may be informed beforehand of certain pre-determined mental categories, pre-determined bio-signal data and/or pre-determined human conduct data applicable to the performance of the task or operation, for example. In the case of a pBCI, for example, classifiers pointing to a particular mental category may be known beforehand, or it may be known that a certain heart rate or variability in the heart rate may point to a certain mental category.

When a specific classifier or set of classifiers is known to be responsive to "relevant" elements, for example, a mental category based on the corresponding output of the respective classifier or classifiers may be predetermined. This as elucidated in the Summary part above.

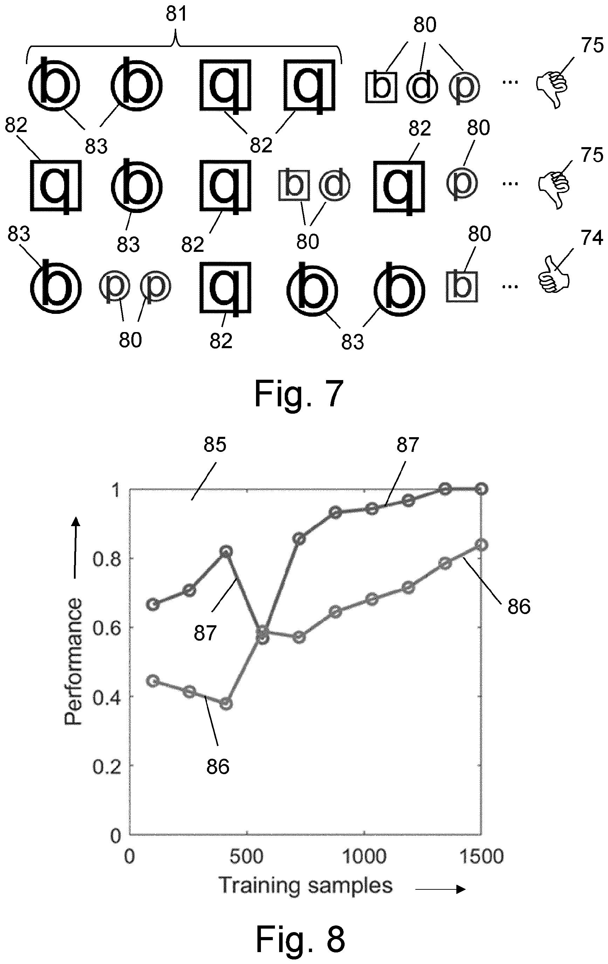

When showing different grids 70 to the human 30, for example the grids as illustrated in Figure 5, the result of applying the method according to the present disclosure is an additional representation of the data grids based on the above-mentioned first, second, third and fourth mental categories formed, indicated by reference numerals 80, 81, 82 and 83, respectively, as schematically illustrated in Figure 7.

Once the Al-enabled data processing algorithm has provided artificial intelligence in accordance with the present method, i.e. after applying a number of different grids 70 and processing the related operational, bio-signal end human conduct data, when providing a new grid 70 to the trained data processing algorithm operated by an information processing device, same may translate the new grid, i.e. the features or elements of the real world, into mental categories and solve a new task based on the mental categories obtained. That is, sensing operational data from a real-world context and mapping same with certain mental categories or collections of mental categories, as disclosed in the Summary part above.

As an intermediate step, the brain activity sensed by the pBCI 37, 45, 50 may be decoded into a Multi-Dimensional Mental State, MDMS, data space, revealing the expert's mental interpretation of each of the inspected elements.

The key here is that different elements will be interpreted and categorized differently by the human expert, depending on a respective qualification rule. This MDMS, consisting of relevant foundational mental processes, is capable of reflecting these different mental responses and the above-mentioned mental categories may be assigned to the MDMS data space incorporating the expert's context associated MDMS information. NCL identifies and extracts specific mental categories from the MDMS as they relate to specific context occurrences. In this example, it learns that certain on-screen elements elicit categorically different MDMS responses than others and identifies at least four mental categories.

Using these categories simplifies the search space thus enhancing model training in comparison to the original problem when the model relied only on the raw data.

With the present method, an Al has been generated that can use a mental representation learned from a human expert in its own logic.

The present manner of mimicking, by an Al, a strategy based on mental categories learned from a human individual adheres to or connects excellently to the way the human brain considers people, objects and actions are related and reflect what kind of learning may be going on in the brain.

Figure 8 shows, in a graphical illustration 85, based on simulated data, the difference between traditional training of an Al-enabled data processing algorithm just from the raw data, i.e. the graph 86, compared to providing Al in accordance with the present method, illustrated by graph 87. In the graphical illustration 85, the number of grids or training samples 70 provided are set along the horizontal axis, and the performance provided by the trained Al is indicated along the vertical axis, in a number ranging from 0, i.e. no performance, to 1, i.e. excellent performance.

As can be clearly seen form Figure 8, the method according to the present disclosure performs already from the start significantly better than the prior art methods, i.e. even with a relative low number of grids or training samples.

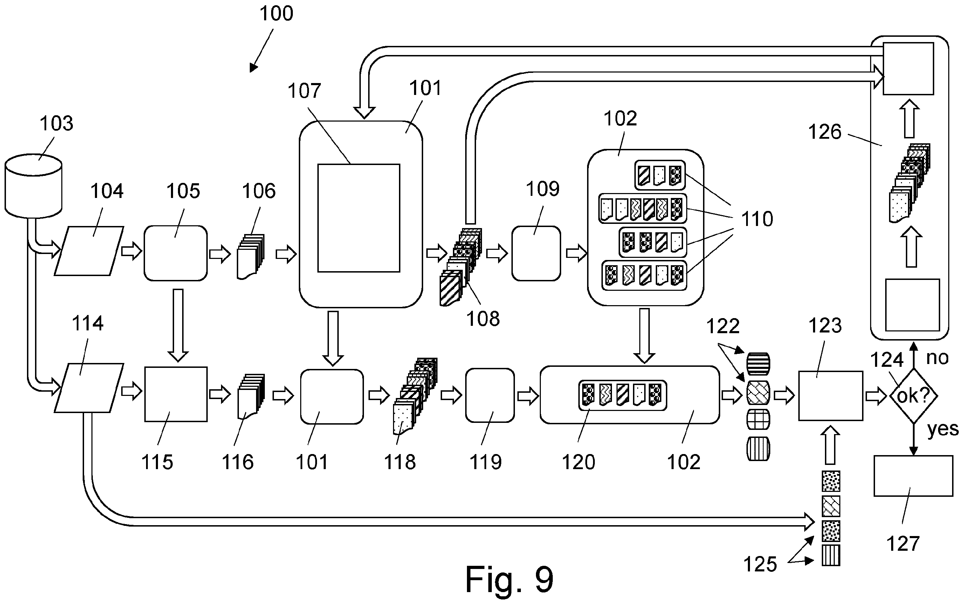

Figure 9 illustrates, in a process type diagram, steps of an embodiment of the method according to the present disclosure, implemented in an information processing device 100 operating two Al-enabled data processing algorithms, indicated by reference numerals 101 and 102, respectively.

In a first step 103, simultaneously collected operational data originating from a context, either a probing context or a real-life context, and human bio-signal data and human conduct data relating to human participation with this context are obtained by the information processing device 100.

In a second step 104, a first or initial training is performed, starting with a process for selection 105 of operational data of interest, based on at least one of the human bio-signal data and human conduct data related to this operational data.

To the thus selected operational data and corresponding bio-signal and human conduct data, indicated as a whole by reference numeral 106, the first Al-enabled data processing algorithm 101 assigns or allocates 107 a plurality of mental categories 108. A mental category comprising and/or referring to part or an aspect or feature of the selected operational data associated with at least one of the human bio-signal data and the human conduct data corresponding to that mental category.

The assigning or allocation step 107 may comprise several intermediate steps like sorting, grouping, and performing a mental assessment of the data, that is identifying or decoding mental processes, identifying or decoding mental states from multiple simultaneous mental processes, and constructing an MDMS data space, for example, in accordance with the present disclosure.

The mental categories 108 are inputted as data 109 at the second Al-enabled data processing algorithm 102, by which one or more collections of mental categories 110 is or are formed. A collection of mental categories comprises at least one of a set of operational data associated with mental categories and a set of collections of mental categories. The collections of mental categories 110 formed describe the operational data as provided from the human participating in the context, i.e. a human performing a task with the context, for example.

After this first or initializing step 104, in which the first and second Al-enabled data processing algorithms 101, 102 are initialized, based on the collected data 103, a training or analysis step 114 is performed by the first Al-enabled data processing algorithm 101. In this second training 114, from the collected data 103, operational data and corresponding bio-signal and human conduct data 116 are selected 115, and the thus selected data 116 are processed by the Al-enabled data processing algorithm 101.

This results in mental categories 118 that are inputted 119 at the now initialized second Al-enabled data processing algorithm 102, by which one or more collections of mental categories 120 is or are formed. It is noted that the mental categories 120 may be formed using several intermediate steps comprising one or more of sorting, grouping, identifying or decoding mental processes, identifying or decoding mental states from multiple simultaneous mental processes, and constructing an MDMS data space, for example, in accordance with the present disclosure.

Based on the input data 119 and the collections mental categories 120, the second Al-enabled data processing algorithm 102 processes a result 122 as if the information processing device 100 operated with the context in performing a task, operation or other handling with the context.

The result 122 is now compared 123, 124 with a result 125 directly obtained from the human participation in the context, performing the same task, operating or handling with the context as the information processing device 100 leading to result 122.

Based on this comparison, the above steps of allocating, forming and comparing may be repeated 126, i.e. result "no" of the comparing step, until the compared decisions match within predefined criteria 124, i.e. result "yes" of the comparing step.

In the repeating step 126 several processing steps may be performed at the mental categories 108 and/or at the algorithm forming them 107, based on the result of the comparing step 123, 124, as illustrated in block 126. For example, the creation of new mental categories, strategies, et cetera, and comparison with the previous mental categories, as schematically illustrated in block 126.

Eventually, the resulting mental categories and training of the first and second Al-enabled data processing algorithms 101, 102 results in artificial intelligence 127 enabling the information processing device 100 to process operational data originating from a context representing human participation with the context.

The order of the above steps may be interchanged, and steps may be executed in parallel, for example, while the identification or decoding of mental processes and mental states, the construction of an MDMS data space, and the assignment of mental categories may all be based on an automated analysis of collected bio-signal data and/or conduct data using appropriate classifiers or classification algorithms, assigning a mental category or mental categories based on data-driven/algorithmically partitioning of the MDMS space, and performed in real-time or quasi-real time.

The methods and systems described herein can be implemented in many ways. For example, the method can be encoded on a transient or non-transient computer-readable storage medium such as a data transmission signal, CD-ROMs, memory cards, optical drives, magnetic drives, flash drive, or the like. The system can be implemented on a general use computer, a specialized computing system, or implemented in hardware/firmware. These are collectively known as information processing devices' herein.

As one skilled in the art would recognize, further modifications and adjustments are conceivable based on the above-described embodiments, which further modifications and adjustments are all considered to be encompassed by the enclosed claims.

## Claims

1. A method of providing artificial intelligence from human participation with a context, in particular a real-life context, said method performed by an information processing device operating at least one data processing algorithm enabling artificial intelligence, said information processing device performing the steps of:
- simultaneously collecting operational data originating from said context and human bio-signal data and human conduct data originating from said human participation with said context;
- identifying mental processes from at least one of said bio-signal data and said human conduct data, a mental process referring to an aspect of at least one of human cognition, emotion and individual mechanisms of human information processing;
- assigning mental categories, a mental category referring to at least one of said mental processes associated with an aspect of at least one of said operational data and said human conduct data, and
- providing said artificial intelligence from applying said mental categories by said at least one data processing algorithm enabling artificial intelligence.

2. The method according to claim 1, said information processing device further performing the steps of:
- identifying mental states from simultaneous mental processes, a mental state referring to a condition of at least one of human cognition, emotion and individual mechanisms of human information processing;
- constructing a multi-dimensional mental state data space, wherein a respective mental process forms a dimension of said multi-dimensional mental state data space, and
- assigning mental categories in said multi-dimensional mental state data space, a mental category referring to a particular subspace of said multi-dimensional mental state data space associated with aspects of at least one of said operational data and said conduct data.

3. The method according to claim 2, wherein said multi-dimensional mental state data space is constructed comprising psychological, cognitive, affective, neurophysiological, and otherwise human mind-related states, including but not limited to aspects of at least one of reasoning, problem solving, planning, abstract thought, concluding, interpreting, thinking, prediction, reflection, creativity, imagination, strategy, logic, moral judgement, empathy, agreement, confusion, understanding, comprehension, engagement, and satisfaction.

4. The method according to any of the previous claims, wherein said step of identifying mental processes comprises:
- identifying at least one of cognitive load, memory encoding, memory retrieval, perception, attention, error processing, emotion recognition, surprise, reward processing, pain, pattern recognition, intention, affect, valence, and arousal.

5. The method according to any of the previous claims, wherein said step of assigning mental categories comprises at least one of:
- assigning at least one predetermined mental category;
- assigning at least one mental category based on at least one predetermined mental process;
- assigning at least one mental category based on at least one of selected human conduct data and selected operational data, and
- assigning at least one mental category determined from a different context.

6. The method according to any of the previous claims, wherein said at least one data processing algorithm enabling artificial intelligence comprises labels, wherein said step of providing said artificial intelligence comprises enhancing at least one of said labels based on at least one mental category.

7. The method according to any of the previous claims, wherein said step of providing said artificial intelligence comprises applying a collection of mental categories, wherein a collection of mental categories is at least one of a set of mental categories and a set of collections of mental categories.

8. The method according to any of the previous claims, wherein said step of simultaneously collecting operational, human bio-signal and human conduct data comprises:
- simultaneously collecting human bio-signal data from at least one of an individual and a group of individuals participating with said context sensed by at least one sensor, said human bio-signal data comprising any of human bio-signals and measurements of human physiological structure and function of said human participant, including but not limited to at least one of direct and indirect measurements of electro cardiac activity, body temperature, eye movements, pupillometric, hemodynamic, electromyographic, electrodermal, oculomotor, respiratory, salivary, gastrointestinal, genital activity and brain activity;
- simultaneously collecting human conduct data from at least one of an individual and a group of individuals participating with said context sensed by at least one sensor, said human conduct data comprising any of human expressions, communication and physical activity by said human participant, including but not limited to input modalities comprising a keyboard, push buttons, switches, touch screen, mouse, joystick, electronic pencil/stylus, laser pointer, motion controller, game controller, microphones, cameras, thermal imagers, motion capture devices, pressure sensors, and gyroscopes, and
- simultaneously collecting operational data comprising at least one of physical data and virtual data originating from said context.

9. The method according to claim 8, wherein brain activity data are processed by at least one brain-computer interface, in particular at least one passive brain-computer interface, operating at least one classifier responsive to implicit human brain activity indicative of at least one mental process.

10. The method according to any of the previous claims, wherein operational data are provoked by said information processing device, in particular wherein operational data are provoked by said information processing device to evoke at least one mental process, and more particular wherein operational data are provoked by said information processing device to evoke at least one mental category.

11. The method according to any of the previous claims, wherein said information processing device is arranged for repeating said steps referring to identifying mental processes, assigning mental categories, and providing said artificial intelligence each time based on a differing selection of said collected data, until a result of human participation with said context and a result of operating with said context by said at least one data processing algorithm enabling artificial intelligence applying said mental categories match within predefined criteria.

12. A method of real-time processing operational data originating from a context, in particular a real-life context, said method performed by an information processing device operating at least one data processing algorithm enabling artificial intelligence processing said operational data applying mental categories, in particular mental categories mapped at a multi-dimensional mental state data space, in accordance with any of the previous claims.

13. A data processing system, comprising means arranged for performing the data processing method according to any of the previous claims.

14. A program product, comprising instructions stored on any of a transitory and a non-transitory medium readable by an information processing device, said instructions arranged to perform the method according to any of the claims 1 - 12, when said instructions are executed by an information processing device, including any of a computer and a computer application.

15. Use of mental categories for providing artificial intelligence by an information processing device operating at least one data processing algorithm enabling artificial intelligence.
